Europäisches Patentamt

European Patent Office

Office européen des brevets

(11) Numéro de publication: **0 670 663 A1**

# DEMANDE DE BREVET EUROPEEN

(21) Numéro de dépôt: **95200384.6**

(22) Date de dépôt: **17.02.95**

(51) Int. Cl.⁶: **H04N 7/50**, H04N 7/30

(30) Priorité: **02.03.94 FR 9402382**
**26.05.94 FR 9406380**

(43) Date de publication de la demande:
**06.09.95 Bulletin 95/36**

(84) Etats contractants désignés:
**DE FR GB IT SE**

(71) Demandeur: **LABORATOIRES
D'ELECTRONIOUE PHILIPS
22, Avenue Descartes
F-94450 Limeil-Brévannes (FR)**

(84) **FR**

(71) Demandeur: **PHILIPS ELECTRONICS N.V.
Groenewoudseweg 1
NL-5621 BA Eindhoven (NL)**

(84) **DE GB IT SE**

(72) Inventeur: **Tranchard, Lionel, Société Civile
S.P.I.D.
156, Boulevard Haussmann
F-75008 Paris (FR)**

(74) Mandataire: **Landousy, Christian
Société Civile S.P.I.D.
156, Boulevard Haussmann
F-75008 Paris (FR)**

(54) **Procédé et dispositif de codage de signaux numériques représentatifs d'une séquence d'images.**

(57) Dispositif de codage d'une séquence d'images divisée en groupes successifs de N images elles-mêmes organisées en blocs ou macroblocs d'image et comprenant au moins une voie de quantification et codage à longueur variable desdits blocs ou macroblocs et un sous-ensemble de régulation de débit. Selon l'invention, ce sous-ensemble comprend en série une mémoire-tampon (10) et un dispositif (110) de modification du pas de quantification, comprenant lui-même, en série, un étage (200) d'allocation de bits pour chaque image successive de la séquence d'images, un étage (300) d'allocation de bits pour cette image et les (N-1) images suivantes, un étage (400) de correction de l'allocation de bits de chaque nouvelle image à coder, un étage (500) de modification du pas de quantification en fonction de ladite allocation corrigée, et éventuellement un étage (600) de traitements complémentaires.
Application : compression numérique de signaux vidéo.

FIG.4

La présente invention concerne un procédé de codage de signaux numériques représentatifs d'une séquence d'images organisée en groupes successifs de N images chacun et subdivisées en tranches regroupant chacune un certain nombre de macroblocs d'image, comprenant au moins une étape de quantification et de codage desdits signaux codés et une étape de régulation du débit des signaux par calcul d'une grandeur dite complexité de l'image et modification du pas de quantification des signaux à coder en fonction de la complexité ainsi calculée.

Cette invention concerne également, pour la mise en oeuvre de ce procédé, un dispositif de codage de signaux numériques représentatifs d'une séquence d'images organisées en groupes successifs de N images chacune et subdivisées en tranches regroupant chacune un certain nombre de macroblocs d'image, comprenant au moins des moyens de quantification et de codage desdits signaux associés à des moyens de régulation du débit des signaux codés par calcul d'une grandeur dite complexité de l'image et modification du pas de quantification des signaux à coder en fonction de la complexité ainsi calculée.

Les applications de l'invention se situent essentiellement dans le domaine de la transmission ou du stockage d'images codées. L'invention est utilisable notamment dans un codeur à longueur variable compatible avec la norme MPEG-2 (MPEG, pour "Moving Picture Expert Group", un groupe d'experts de l'organisation de normalisation internationale ISO : on rappellera plus loin, avant la description détaillée de l'invention, les caractéristiques essentielles d'un flot de données conforme à ce standard MPEG-2, adopté ces dernières années par l'ISO pour la transmission et/ou le stockage d'images animées).

De nombreux documents, et par exemple l'article "Two-layer video coding for ATM networks", de G.Morrison et D. Beaumont, paru dans "Signal Processing : Image Communication", vol.3, n$^{os}$ 2-3, juin 1991, pp.179-195, décrivent la structure de base de codeurs vidéo, prévus pour fonctionner à débit constant. Dans ce domaine, le brevet des Etats-Unis d'Amérique n° 5231484 décrit plus particulièrement un procédé et un système de compression de signaux vidéo compatibles avec le standard MPEG et reposant sur un principe de régulation du débit de la mémoire-tampon de sortie du dispositif de codage à longueur variable prévu dans le codeur.

Bien que de tels procédés connus de compression de données, et en particulier ceux compatibles avec les spécifications MPEG, aient pour objectif de maintenir effectivement un débit constant en moyenne, une certaine latitude est, malgré tout, laissée pour la fixation du nombre de bits qui est individuellement affecté à chaque image de la séquence à traiter (en effet, assigner exactement le même nombre de bits à chaque image conduirait à reconstituer ultérieurement une séquence d'images de qualité trop fluctuante). Le codeur décrit par exemple dans le brevet US 5231484 comprend à cet effet un système d'allocation de bits dans lequel le procédé pour définir par image les nombres de bits souhaitables consiste à déterminer par image une mesure de la difficulté à comprimer et coder les images, puis à faire évoluer, grâce à la présence d'une mémoire virtuelle dont l'état de remplissage est calculé en fonction de ladite mesure, la valeur du pas de quantification dans l'opération de quantification des signaux d'images prévue au cours du codage.

Cependant tout codage compatible avec la norme MPEG (cette norme, on peut le rappeler, ne spécifie que l'organisation du flot de données représentant les images comprimées et les caractéristiques du processus de décodage que doit respecter un décodeur pour pouvoir être qualifié de compatible avec la norme) réalise préalablement un regroupement des images en groupes d'images appelés GOPs (de l'anglais "Group Of Pictures") et comprenant chacun un nombre déterminé d'images consécutives, et les allocations de bits sont alors prédéfinies par GOP. Il en résulte souvent que certaines images en début de GOP consomment une part importante de l'allocation du GOP et que les dernières images de celui-ci ne disposent plus d'allocations individuelles suffisantes pour maintenir une qualité d'image suffisante. Ce problème technique prend même une acuité encore plus grande lorsqu'on évoque, dans le domaine de la diffusion de programmes de télévision, ces prochaines applications vidéo qui rendront pratiquement nécessaire de disposer de débits variables selon ces programmes, ou de débits tout au moins commutables. Il faudra, dans ces applications, pouvoir modifier le débit vidéo d'un programme sans interruption de service au moment du changement de débit, et avec une certaine souplesse dans la répartition des allocations de bits, que n'autorisent pas les réalisations actuelles.

Un premier but de l'invention est donc de proposer un procédé de codage permettant, en réponse à ce problème de type nouveau, de prévoir la possibilité de commutations de débit sans aucune interruption ou perturbation du service de diffusion, en particulier pendant la période de transition d'un débit à l'autre, et présentant effectivement cette souplesse dans les affectations de bits par image dans la séquence des signaux correspondant auxdits programmes diffusés.

A cet effet, l'invention concerne un procédé de codage tel que défini plus haut, dans le préambule de la description, et qui est en outre caractérisé en ce que :

(A) ladite complexité est définie comme un nombre de bits par image proportionnel au nombre de bits observé à l'issue du codage ;

(B) l'étape de régulation de débit comprend les sous-étapes suivantes :

(1) pour chaque groupe déterminé de N images successives, évaluation d'un nombre de bits dit profil du groupe, de valeur PROF proportionnelle à ladite complexité, au nombre N et au débit R(t) observé en sortie du codage, et inversement proportionnelle à la période des images ;

(2) pour chaque nouvelle image courante à coder de la séquence :

(a) estimation d'un nombre de bits correspondant à cette image et de valeur NBNP proportionnelle :

- d'une part à ladite complexité ;
- d'autre part à un nombre de bits par groupe dit glissant, de valeur NBSG elle-même proportionnelle audit profil de groupe et à la différence entre la valeur de NBSG pour l'image précédente et le nombre total de bits par image, chaque groupe dit glissant étant défini comme composé de ladite nouvelle image et de (N-1) images adjacentes à celle-ci formant avec elle un groupe se décalant d'une image à chaque nouvelle image ;

(b) correction de ladite estimation, par évaluation d'un nombre de bits corrigé correspondant à cette même image, de valeur CNNP choisie parmi trois valeurs comprenant la valeur estimée NBNP ainsi que deux valeurs-limites MIN(CN) et MAX(CN) d'état de remplissage d'une mémoire-tampon de stockage des signaux codés, le critère de choix étant la sélection de celle des valeurs qui est comprise entre les deux autres ;

(3) pour chaque macrobloc de ladite nouvelle image, calcul d'un coefficient de modification du pas de quantification de ce macrobloc, ledit coefficient étant égal ou proportionnel à la somme d'un nombre de bits exprimant l'état initial de remplissage d'une mémoire-tampon dite virtuelle et d'un nombre complémentaire égal au nombre de bits déjà engendrés par le codage des (j-1) macroblocs précédant le macrobloc concerné, de rang j, dans la même image, diminuée d'un nombre de bits correcteur lié aux valeurs de j et de CNPP et au nombre de macroblocs par image.

Dans ce procédé de codage, chaque groupe glissant est, de préférence, composé, pour chaque nouvelle image, de cette image et des (N-1) images qui la suivent. Mais, quelle que soit la structure de ce groupe glissant, un mode particulier de réalisation de l'invention consiste à prévoir que ladite complexité, notée X, soit définie comme égale au produit du nombre de bits observé à l'issue du codage par le pas de quantification moyen sur une image.

Une variante perfectionnée de l'invention consiste alors à prévoir, lorsque les images de la séquence sont de type T différent dit I, P, ou B respectivement selon qu'il leur est appliqué un mode de codage dit intra indépendant de toute autre image, ou un mode de codage dit prédictif utilisant une prédiction de mouvement unidirectionnelle à partir d'une autre image intra ou prédite, ou un mode de codage à interpolation bidirectionnelle à partir d'une image antérieure et d'une image postérieure, que ladite complexité, notée X(T), soit définie comme égale au produit du nombre de bits $S_i(T)$ observé à l'issue du codage d'une image de même type T par le pas de quantification moyen $Q_i^m(T)$ sur une image de même type T.

Un perfectionnement supplémentaire peut être apporté à cette variante en prévoyant, exclusivement lorsque les images sont de type P, que ladite complexité soit définie comme égale au plus faible desdits produits $(S_i(T) \times Q_i^m(T))$ et

$$(S_{i-1}(T) \times Q_{i-1}^m(T))$$

calculés respectivement sur l'image courante et sur la ou une image précédente de même type P.

Dans tous les cas, quel que soit le mode de définition de la complexité, des valeurs initiales lui sont imposées pour les premières images d'une séquence, tant qu'elles sont en nombre insuffisant pour constituer un groupe d'images.

Dans le mode de réalisation plus particulièrement envisagé, où les images de la séquence sont de type I, P, ou B, la valeur de profil de groupe, désignée par l'expression PROF(T) est calculée au début de chaque groupe déterminé, par type d'image également, et pour toute la durée de ce groupe déterminé. Selon un mode de détermination préférentiel de cette grandeur, chaque valeur PROF(T), pour T = I, P, ou B, est proportionnelle à l'expression X(T) x N x R(t), calculée pour chaque type d'image T au début de chaque groupe déterminé.

Un autre but de l'invention est de proposer un dispositif de codage permettant la mise en oeuvre dudit procédé de codage, c'est-à-dire permettant effectivement de modifier par commutation le débit de sortie sans que le service de diffusion soit perturbé.

3

A cet effet, l'invention concerne un dispositif de codage tel que défini plus haut, également dans le préambule de la description, et qui est en outre caractérisé en ce que lesdits moyens de régulation de débit comprennent eux-mêmes :

(A) des moyens d'évaluation de la complexité en fonction du nombre de bits observé à l'issue du codage et du pas de quantification moyen sur une image ;

(B) des moyens d'estimation d'un nombre de bits NBNP dit allocation de bits et évalué pour chaque nouvelle image courante à coder de la séquence, en fonction :

(1) d'une part d'un nombre de bits dit profil de groupe, dont la valeur PROF, calculée successivement pour chaque groupe déterminé de N images, est proportionnelle à la complexité, au nombre N et au débit R(t) observé en sortie du codage et inversement proportionnelle à la période des images ;

(2) d'autre part des grandeurs suivantes, évaluées pour chaque image de la séquence :

(a) la complexité ;

(b) un nombre de bits par groupe glissant de valeur NBSG proportionnelle audit profil de groupe et à la différence entre la valeur de NBSG pour l'image précédente et le nombre total de bits par image, chaque groupe dit glissant étant défini comme composé de ladite nouvelle image et de (N-1) images adjacentes à celles-ci formant avec elle un groupe se décalant d'une image à chaque nouvelle image ;

(C) des moyens de correction d'allocation de bits, prévus pour déterminer, pour chaque nouvelle image à coder, un nombre de bits corrigé dit allocation de bits corrigée CNNP, se substituant à ladite valeur d'allocation de bits NBNP et dont la valeur est choisie parmi trois valeurs comprenant ladite valeur d'allocation non corrigée NBNP estimée précédemment ainsi que deux valeurs-limites MIN(CN) et MAX-(CN) d'état de remplissage d'une mémoire-tampon de stockage des signaux codés, le critère de choix étant la sélection de celle des valeurs qui est comprise entre les deux autres ;

(D) des moyens de modification du pas de quantification de chaque macrobloc de ladite nouvelle image, à l'aide d'un coefficient de modification égal ou proportionnel à la somme d'un nombre de bits dit état initial de remplissage d'une mémoire-tampon dite virtuelle et d'un nombre complémentaire égal au nombre de bits déjà engendré par le codage des (j-1) macroblocs précédant le macrobloc concerné, de rang j, dans la même image, diminuée d'un nombre de bits correcteur lié aux valeurs de j et de l'allocation de bits corrigée CNNP et au nombre de macroblocs par image.

Le dispositif ainsi proposé se prête à une mise en oeuvre sous la forme du déroulement d'une série d'instructions constituant un logiciel et exécutées sous le contrôle d'un microprocesseur ou d'un ordinateur, lesdites instructions successives assurant elles-mêmes l'exécution des diverses étapes de définition, d'évaluation, d'estimation, de correction et de calcul décrites précédemment.

Cependant, ce n'est pas là le seul mode de réalisation possible. Dans une autre variante de mise en oeuvre du procédé décrit plus haut, le dispositif de codage selon l'invention peut être réalisé sous la forme de modules électroniques successifs, lesdits moyens de régulation de débit comprenant alors :

(A) un étage de détermination de la complexité pour chaque nouvelle image courante à coder en fonction du nombre de bits correspondant aux signaux codés et du pas de quantification moyen sur une image ;

(B) un sous-ensemble de modification de pas de quantification comprenant en série :

(a) un étage de détermination de l'allocation de bits NBSG par groupe d'images glissant, en appelant groupe glissant celui qui inclut ladite image courante à coder et les (N-1) images suivantes ;

(b) un étage de correction d'allocation de bits pour chaque nouvelle image courante à coder, en fonction de ladite allocation NBSG par groupe d'images glissant et desdites valeurs-limites d'état de remplissage de la mémoire-tampon de stockage des signaux codés ;

(c) un étage de modification du pas de quantification en fonction de ladite allocation de bits corrigée CNNP.

Dans un dispositif de codage tel que celui qui est concerné ici, le processus de régulation du débit de la mémoire-tampon de sortie de ce dispositif est d'ordinaire réalisé essentiellement en fonction de l'état de remplissage de cette mémoire. Dans un dispositif de codage traitant un flot de données de type MPEG, c'est-à-dire dont les signaux représentatifs de la séquence d'images sont rassemblés en groupes d'images (ou GOPs) successifs, un nombre de bits déterminé (ou quota, ou contingent) est en général alloué par GOP. Cependant, les images elles-mêmes ont besoin individuellement, pour leur codage, d'un nombre de bits différent selon leur type (par exemple, en se référant aux types d'image I, P, B tels que définis plus haut, on constate qu'une image de type I demande un contingent de bits deux à trois fois supérieur à celui que demande une image de type P, qui, à son tour, demande un contingent trois à cinq fois supérieur à celui d'une image de type B), et il arrive souvent, compte tenu de l'action du processus de régulation qui doit faire face à l'épuisement progressif du quota du GOP, que la qualité d'image se détériore à la fin de ce GOP par rapport à ce qu'elle est au début du GOP.

L'intérêt du procédé et du dispositif présentés ici est alors, pour une complexité à peine accrue et donc sans influence sensible sur le coût global du dispositif de codage, d'effectuer la régulation de débit non plus dans des groupes d'images réels successifs, de longueur N images, tels que définis dans un flot de données MPEG, mais dans des groupes d'images glissants (ou SGOP, de l'anglais Sliding GOP : un SGOP est de même longueur qu'un GOP, mais est reconstitué à chaque nouvelle image à coder et comprend par exemple ladite nouvelle image et les (N-1) images qui la suivent), et de réévaluer en permanence, à chaque nouvelle image courante (et donc quelle que soit la position de celle-ci dans un GOP réel), le nombre de bits pouvant être alloué pour le codage de ces N images successives du SGOP. Cette mise à jour continue permet une estimation plus précise du contingent de bits utile pour chaque image, et la régulation par modification du pas de quantification qui en résulte, étant en quelque sorte réinitialisée au début de chaque nouvelle image, reste très efficace et rapide, même en cas de changement de scène complet, tout en garantissant que les variations de qualité d'image restent réduites, effectuées en douceur, et exemptes de tout effet de périodicité de GOP, de défaut de transition entre images, ou de tout autre artefact de nature similaire.

Lorsque les images successives de la séquence sont de type I, P ou B, le dispositif de codage est alors tel que ledit étage de détermination de complexité pour chaque nouvelle image à coder comprend, dans un premier mode de réalisation :

(a) une première mémoire de stockage de valeurs d'initialisation de la complexité pour la première image à coder, et un premier circuit de multiplication du nombre de bits consécutif au codage de l'image courante par la sortie d'un circuit de calcul de pas de quantification moyen par image ;

(b) un circuit de sélection, selon le type I, P ou B de l'image courante et selon que cette image courante de type déterminé est l'image initiale ou non de la séquence, d'une seule des quatre sorties de ladite première mémoire et dudit premier circuit de multiplication, la sortie dudit circuit de sélection constituant ladite complexité de l'image courante concernée.

Dans une variante de réalisation plus perfectionnée, ledit étage de détermination de complexité comprend également un deuxième circuit de multiplication, recevant par l'intermédiaire d'une deuxième mémoire de stockage le nombre de bits de codage et le pas de quantification moyen qui correspondent à l'image de même type précédant l'image courante, le circuit de sélection recevant alors également la sortie dudit deuxième circuit de multiplication pour sélectionner, selon le type de l'image courante et selon que cette image courante de type déterminé est l'image initiale ou non de la séquence, une seule des cinq sorties de ladite première mémoire et desdits premier et deuxième circuits de multiplication.

Dans l'un ou l'autre cas, l'étage qui suit cet étage de détermination de complexité, à savoir l'étage de détermination de l'allocation de bits NBSG par groupe d'images glissant, comprend de préférence d'une part un circuit de calcul de profil, ou allocation fixe, pour un groupe déterminé de N images successives de la séquence, ce calcul étant effectué en fonction du type I, P, B et de la complexité de la première image de ce groupe déterminé, et d'autre part un circuit d'estimation d'un nombre de bits, ou allocation, par groupe d'images glissant, ladite estimation étant donnée par l'expression suivante :

$$NBSG = NBSG - NBPP + PROF(T)$$

dans laquelle :
- PROF(T) est ledit profil calculé ;
- NBPP est le nombre total de bits par image ;
- NBSG est, pour la première image dudit groupe d'image glissant, égal à une valeur d'initialisation $NBSG_0 = NBRG$ et, pour les images ultérieures, la valeur NBSG obtenue par la mise à jour effectuée selon ladite expression ;
- NBRG représente l'allocation globale pour ledit groupe déterminé et est défini par l'expression suivante :

$$NBRG = NR_2/P + WBF - F_e(GOPST) + (R_1 - R_2) D_b$$

dans laquelle :
- $F_e(GOPST)$ désigne l'état de remplissage réel de la mémoire-tampon de stockage des signaux codés ;
- P désigne la période des images ;
- $R_1$ et $R_2$ désignent le débit en sortie de ladite mémoire-tampon respectivement avant et après ordre de commutation de débit, avec $R_1 = R_2 = R(t)$ en cas d'absence de commutation de débit ;

- $D_b$ est la somme de retards $D_{eb}$ et $D_{db}$ dûs respectivement à ladite mémoire-tampon du dispositif de codage et à la mémoire-tampon de décodage qui doit lui être associée de façon correspondante dans un dispositif de décodage ;
- WBF est l'état de remplissage souhaité pour ladite mémoire-tampon au début de chaque groupe déterminé et est défini par l'expression WBF = $F_{min}(t)$ + $4R_2/(P \times NBSP)$, où NBSP est une constante désignant le nombre de tranches d'image par image et $F_{min}(t)$ est la limite inférieure absolue de l'état de remplissage de ladite mémoire-tampon.

S'il y a changement de débit (commutation de $R_1$ à $R_2$), il est alors préférable que l'instant de validation de l'ordre de commutation de débit par ledit dispositif coïncide avec le début d'un desdits groupes d'images déterminés de la séquence.

Avec ou sans changement de débit, à la suite de l'étage de détermination d'allocation par groupe glissant, l'étage de correction d'allocation de bits pour chaque nouvelle image à coder comprend de préférence un circuit d'évaluation du nombre de bits, ou allocation, envisagé pour la prochaine image dudit groupe déterminé, suivi d'un circuit de correction de ladite allocation, et l'étage de modification du pas de quantification comprend de préférence un circuit d'initialisation d'état de remplissage d'une mémoire-tampon virtuelle, un circuit de calcul de l'état de remplissage courant de ladite mémoire virtuelle, et un circuit de détermination du pas de quantification de chaque macrobloc de l'image courante, prévus en série.

Enfin, le dispositif de codage selon l'invention peut comprendre également un étage de traitements complémentaires, comprenant lui-même un premier circuit de traitement en cas de pénurie de données codées, dont la sortie est reliée au circuit d'initialisation de l'état de remplissage de la mémoire virtuelle, et un deuxième circuit de traitement en cas de débordement des données codées, dont la sortie est reliée d'une part à l'entrée des moyens de quantification et de codage et d'autre part audit circuit d'initialisation de l'état de remplissage de la mémoire virtuelle.

Les particularités et avantages de l'invention apparaîtront maintenant de façon plus précise dans la description détaillée qui suit et dans les dessins annexés, donnés à titre d'explication et d'exemples non limitatifs et dans lesquels :

- la figure 1 montre un exemple de séquence d'images, constituée ici de groupes (GOP) de neuf images, accompagnées de l'indication de leur type I, P ou B selon le mode de codage adopté pour chacune d'elles ;
- la figure 2 est une représentation simplifiée d'une image (partie gauche de la figure) subdivisée en n tranches $S_1$ à $S_n$, chacune desdites tranches comprenant r macroblocs $MB_1$ à $MB_r$ eux-mêmes constitués chacun de quatre blocs de luminance $Y_1$ à $Y_4$ et de deux blocs de chrominance U et V, et ces blocs B comprenant ici 8 x 8 points d'image ;
- la figure 3 montre la structure générale d'un dispositif de codage à longueur variable de type classique ;
- la figure 4 montre un exemple de réalisation, dans un tel dispositif de codage, d'un sous-ensemble de régulation de débit modifié conformément à la présente invention ;

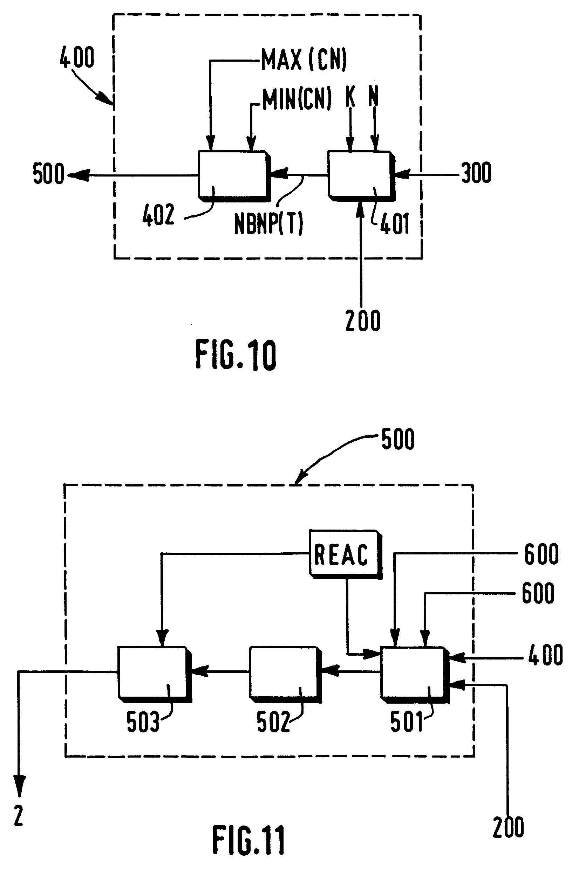

- les figures 5, 6, 10, 11 montrent des exemples de réalisation de quatre des étages de ce sous-ensemble de régulation de débit de la figure 4 ;
- la figure 7 illustre les différents retards introduits par les mémoires des dispositifs de codage et de décodage ;
- la figure 8 montre différentes valeurs de débit en sortie de la mémoire-tampon du dispositif de codage ;
- la figure 9 indique les limites correspondantes de variation de l'état de remplissage de cette mémoire-tampon.

Une séquence de signaux numériques telle que celle reçue par le dispositif de codage selon l'invention en correspondance à des images animées comprend des informations relatives à la composante de luminance Y, ainsi que des informations relatives aux composantes de la chrominance, ou signaux de différence de couleur U et V. Les niveaux de gris, pour la luminance Y, et les niveaux de couleur, pour les signaux U et V, sont exprimés par des mots numériques de 8 bits regroupés en matrices. Dans le cas du standard MPEG, le format d'entrée est tel que la chrominance subit un sous-échantillonnage par quatre, par rapport à la luminance. De ce fait, on dispose de deux valeurs liées à la couleur (l'une pour U, l'autre pour V) pour quatre valeurs de luminance. Comme les matrices de mots sont divisées en blocs de 8 x 8 points d'image, quatre blocs adjacents de la matrice Y correspondent à un bloc de la matrice U et à un bloc de la matrice V, et ces six blocs, réunis, constituent un macrobloc (MB). Ces blocs et macroblocs sont les unités de subdivision d'image sur lesquelles est effectué le codage. Enfin, le regroupement d'une série de macroblocs constitue une tranche, et chaque image est composée d'un certain nombre de tranches, par exemple 36 dans l'exemple ici décrit.

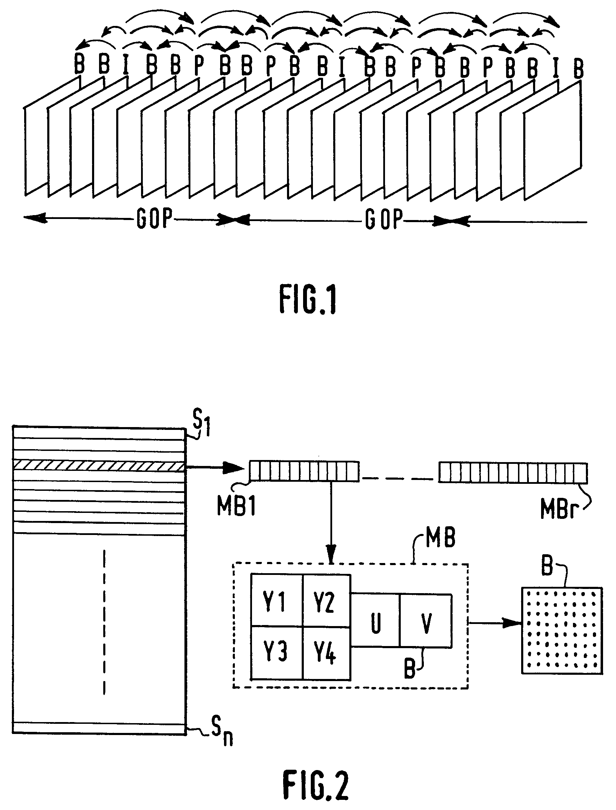

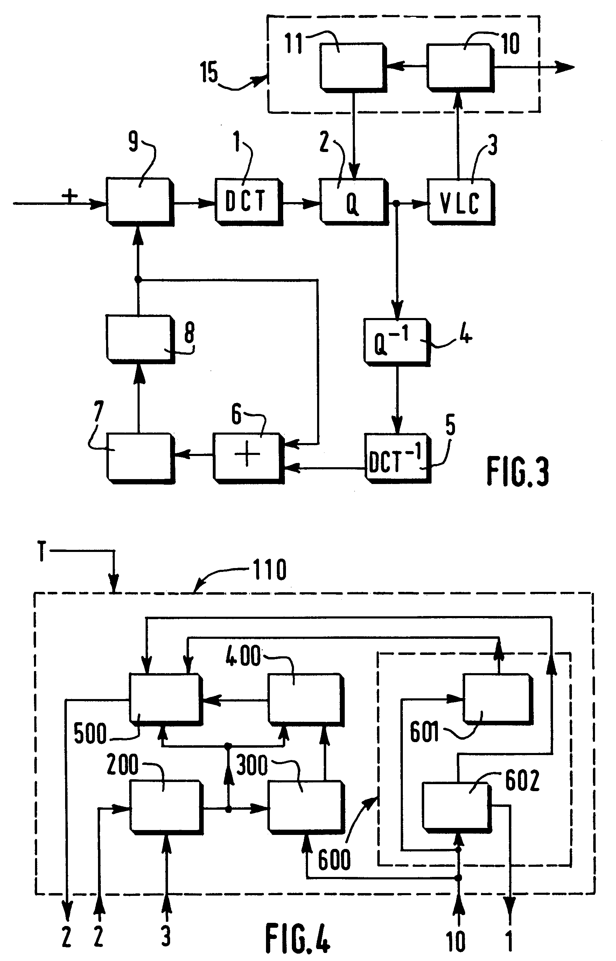

Les images (on appellera ainsi, de manière concise, l'ensemble des signaux numériques leur correspondant) sont elles-mêmes, dans un flot de données MPEG, de trois types, suivant le mode de codage qui leur est appliqué. Les plus simples sont les images I (de l'anglais "Intra frame coded picture"), ou images intra, dans lesquelles tous les macroblocs sont codés indépendamment de toute autre image. Ainsi, en cas de modification du canal de transmission, ou de commutation de débit, on convient d'attendre une telle image de type I pour reconstituer au décodage les nouvelles informations résultant de ladite modification. Les images P (de l'anglais "Predictive coded picture") constituent un deuxième type d'images, prédites par compensation de mouvement unidirectionnelle à partir d'une image précédente (ou éventuellement suivante) de type I ou de type P elle-même, et qui ne peuvent donc contenir que des macroblocs de type P ou de type I. Enfin, les images B (de l'anglais "Bidirectionally predictive coded picture"), prédites par compensation de mouvement bidirectionnelle à partir d'une image antérieure et d'une image postérieure (elles-mêmes de type I et/ou P), peuvent contenir des macroblocs de type I, P ou B indifféremment. Plusieurs images associées constituent un groupe d'images (ou GOP). Comme une image de type B doit utiliser, pour être prédite, l'image P ou I qui la suit, il est manifeste que l'ordre naturel de restitution, après décodage, de la séquence d'origine et l'ordre de transmission des images doivent être différents : dans un GOP, les N images sont placées, pour la transmission, dans l'ordre dans lequel le décodeur en aura besoin pour décoder les images I, P, B. La réorganisation de ces images dans leur ordre naturel n'intervient qu'après le décodage. La figure 1 montre, dans une séquence d'images consécutives, un exemple de deux GOPs de N = 9 images (sans que le choix de N représente une quelconque limitation), avec indication du type T = I, P, ou B de l'image, et de flèches montrant à partir de quelle(s) image(s) une image P ou B est prédite dans l'exemple représenté.

Un flot de données comprend, en définitive, six niveaux d'informations, chaque niveau englobant le niveau inférieur et quelques informations additionnelles. Au niveau le plus élevé correspond la séquence d'images (qui commence par un en-tête comprenant les informations nécessaires au décodage de la séquence : code de départ de séquence, format, cadence d'image, cadence des bits, taille de mémoire et.... et se termine par un code de fin de séquence). Au niveau inférieur, le groupe d'images GOP comprend un en-tête suivi d'un nombre quelconque d'images, dont au moins une image I (bien que ce ne soit pas indispensable, chaque GOP peut être autonome, et peut alors être décodé indépendamment de toute image antérieure ou postérieure à lui, et la suite des images I, P, B est en général périodique, comme dans le cas de l'exemple de la figure 1).

Le niveau encore inférieur, qui correspond à une image telle que représentée sur la figure 2, inclut un nombre déterminé n de tranches d'image $S_1$ à $S_n$ (là encore, un en-tête marque le début de l'image et contient des informations additionnelles : code de départ de l'image, référence temporelle de l'image, type de l'image I, P, ou B, etc...). Le niveau encore inférieur correspond à la tranche d'image et inclut un certain nombre de macroblocs MB (un en-tête marque le début de la tranche et contient des informations additionnelles : code de départ de la tranche, pas de quantification des coefficients DCT, etc...). Le niveau encore inférieur correspond au macrobloc MB, comprenant un certain nombre de blocs, ici 6 ($Y_1$, $Y_2$, $Y_3$, $Y_4$, U, V), précédés d'un en-tête qui contient lui aussi quelques informations additionnelles telles que l'adresse du macrobloc (pour connaître sa position), son type (pour indiquer son mode de codage : intra, prédiction monodirectionnelle, prédiction bidirectionnelle), etc... Le dernier niveau est celui des blocs B, de 8 x 8 points d'image dans le cas présent.

Ces rappels relatifs au standard MPEG étant effectués, on va aborder maintenant successivement la description du procédé de codage selon l'invention, puis celle de son application à la réalisation de dispositifs de codage. On a vu que ledit procédé de codage avait pour objectif de faire face à la situation où l'on veut changer le débit du programme diffusé sans aucune interruption du service de diffusion et de transmission. La description de ce procédé, et de dispositifs de codage correspondants, sera plus claire, cependant, si l'on a défini préalablement les contraintes qui sont imposées au processus de codage, du fait de l'application envisagée (adaptation à différents débits), pour que le processus de décodage se déroule correctement.

Ces contraintes sont, en pratique, les suivantes :

(a) un fonctionnement correct en temps réel, c'est-à-dire avec un retard constant entre l'entrée des données à coder dans le dispositif de codage et la sortie des données à visualiser en sortie du dispositif de décodage correspondant ;

(b) un taux de remplissage correct de la mémoire-tampon présente dans ce dispositif de décodage, afin que celle-ci ne soit ni en situation de débordement, ou excès de données reçues, ni en situation de pénurie de données (ces situations étant respectivement appelées, en anglais, "overflow" et "underflow") ;

(c) le dispositif de codage proposé devant être compatible avec le standard vidéo MPEG, toute une image codée doit être présente dans la mémoire-tampon du dispositif de décodage avant que son décodage effectif ne commence (on sait en effet qu'un flot de données MPEG est supposé pouvoir être décodè par un décodeur théorique qui lirait instantanément chaque image à décoder dans ladite mémoire-tampon) ;

(d) la qualité d'image doit rester la plus constante possible, sans sauts de qualité ou apparition d'une sorte de périodicité dans celle-ci, et la régulation de débit doit être entreprise en opérant une attribution des bits de la façon la plus appropriée à ce but.

Ces précisions étant apportées, le procédé de codage comprend tout d'abord, de façon classique, une étape de quantification et de codage des signaux représentatifs des images (par exemple un codage à longueur variable, intervenant après transformation cosinus discrète (par bloc) desdits signaux et quantification des blocs ou macroblocs ainsi transformés), et une étape de régulation du débit des signaux codés (comprenant par exemple elle-même, en série, une sous-étape de stockage des données codées à longueur variable et une sous-étape de modification du pas de quantification en fonction du débit desdits signaux codés). C'est essentiellement cette dernière sous-étape qui, dans le cadre de la mise en oeuvre du procédé selon l'invention, est modifiée.

Selon l'invention, l'étape de régulation du débit comprend en effet elle-même différentes sous-étapes, précédées d'une opération de définition d'une grandeur dite complexité de l'image courante à coder. Cette complexité, qui définit une allocation d'un certain nombre de bits à chaque image successive, est une grandeur représentative de l'aptitude de cette image courante, compte tenu de son contenu, à être comprimée de façon importante ou non. Elle est ici définie comme un nombre de bits par image proportionnel au nombre de bits observé à l'issue du codage, par exemple comme le produit, noté X, dudit nombre de bits à l'issue du codage et du pas de quantification moyen sur une image. Dans une variante de réalisation, elle peut être différente selon le type de l'image : lorsque les images sont de type T différent dit I, P ou B, la complexité, notée $X(T)$, est alors définie comme égale au produit du nombre de bits $S_i(T)$ observé à l'issue du codage d'une image de même type T par le pas de quantification moyen $Q_i^m(T)$ sur une image de même type T. On peut même particulariser la définition de la complexité selon le type de l'image : pour les images de type P, la complexité est choisie comme égale au plus faible desdits produits $(S_i(T) \times Q_i^m(T))$ et

$$(S_{i-1}(T) \times Q_{i-1}^m(T))$$

calculés respectivement sur l'image courante et sur la ou une image précédente de même type P. Bien entendu, dans tous les cas, il est préférable, pour les premières images d'une séquence qui sont en nombre insuffisant pour former un groupe (GOP), d'imposer des valeurs initiales à ladite complexité.

La complexité des images étant ainsi définie, les sous-étapes de l'étape de régulation de débit conforme à l'invention sont les suivantes. On procède tout d'abord, pour chaque groupe déterminé de N images successives, à l'évaluation d'un nombre de bits dit profil de groupe, de valeur PROF proportionnelle à la complexité précédemment définie, au nombre N d'images par groupe, ainsi qu'au débit, désigné par R-(t), constaté en sortie du codage, et inversement proportionnelle à la période des images. Comme pour la complexité, cette valeur peut être différente selon le type de l'image : désignée alors par PROF(T), ce profil de groupe est alors proportionnel à l'expression $X(T) \times N \times R(T)$, avec T = I, P ou B. On donnera plus loin un exemple particulier de valeur de PROF(T).

Disposant de cette évaluation d'un profil de groupe déterminé pour toute la durée de chaque groupe, on procède alors, pour chaque nouvelle image courante à coder, à l'exécution des trois sous-étapes suivantes : estimation d'un nombre de bits NBNP par image, correction de cette estimation par évaluation d'un nombre corrigé CNNP, calcul d'un coefficient de modification du pas de quantification et donc du débit, qui se trouve ainsi régulé.

La sous-étape d'estimation de la grandeur NBNP consiste à déterminer, pour l'image courante, un nombre de bits proportionnel d'une part à la complexité déjà définie, mais aussi et surtout à une deuxième grandeur qui est un nombre de bits NBSG (Number of Bits per Sliding GOP) déterminé par groupe glissant. On appelle ainsi, dans le cas présent, un groupe de N images reconstitué à chaque nouvelle image courante en ajoutant à celle-ci (N-1) images qui lui sont adjacentes, et de position déterminée par rapport à elle : il en résulte que le groupe, tout en conservant N images, se décale d'une image à chaque nouvelle image, perdant une image à une extrémité et acquérant une image à l'autre extrémité. Dans toute la présente description, on considèrera que chaque groupe glissant est composé, pour chaque nouvelle image, de cette image elle-même et des (N-1) images qui la suivent. En définitive, ce nombre NBSG peut être égal ou proportionnel à une expression de type NBSG + PROF(T) - NBPP, où NBSG représente la précédente valeur de cette grandeur, PROF(T) a déjà été défini, et NBPP (Number of Bits Per Picture) représente le nombre total de bits par image. Comme précédemment, on précisera dans la description d'un exemple de réalisation du dispositif de codage selon l'invention un mode d'estimation concret de NBNP.

La sous-étape de correction de cette estimation consiste à évaluer, pour cette même image courante, un nombre de bits corrigé, dont la valeur, notée CNNP (Corrected Number of bits for the Next Picture), est choisie parmi trois valeurs comprenant d'une part la valeur NBNP avant correction et d'autre part deux limites MIN(CN) et MAX(CN) d'état de remplissage d'état de remplissage de la mémoire-tampon de stockage des signaux codés. Un exemple de définition de ces deux valeurs-limites sera donné plus loin. Le critère de choix entre les trois valeurs ainsi comparées est la sélection de celle d'entre elles qui est comprise entre les deux autres.

Enfin la sous-étape de calcul du coefficient de modification du pas de quantification assure la détermination, pour chaque macrobloc de l'image courante, d'un coefficient $Q_j$ (j étant le rang du macrobloc dans la séquence des macroblocs successifs de l'image concernée) égal ou proportionnel à la somme d'une part d'un nombre de bits ISVB (Initial State of the Virtual Buffer) exprimant l'état initial de remplissage d'une mémoire-tampon dite virtuelle et d'autre part d'un nombre complémentaire égal au nombre de bits PBAD (Picture Bits Already Delivered) déjà engendrés du fait du codage des (j-1) macroblocs précédents de l'image et diminué d'un nombre de bits correcteur lié aux valeurs de j, du nombre de bits corrigé CNNP, et du nombre de macroblocs dans l'image.

Chacune des sous-étapes ainsi définies peut être mise en oeuvre dans un dispositif de codage par l'exécution d'une série d'instructions qui lui correspond. Le déroulement du programme qui regroupe ces instructions permet d'effectuer successivement, sous le contrôle d'un microprocesseur ou d'un ordinateur avec lequel il constitue les moyens de régulation de débit dudit dispositif de codage, les différentes opérations décrites plus haut, à savoir :

- d'une part la définition initiale de la complexité de l'image, selon l'une des variantes décrites précédemment ;
- d'autre part l'évaluation, par groupe déterminé de N images, d'un profil de groupe valable pour toute la durée de ce groupe ;
- et enfin, pour chaque nouvelle image courante, l'estimation de l'allocation de bits NBNP, la correction de cette allocation de bits en fonction de l'état de remplissage de la mémoire-tampon de stockage des signaux codés, et la modification finale du pas de quantification de chaque macrobloc.

Dans l'hypothèse où le dispositif de codage est cette fois mis en oeuvre à l'aide de modules électroniques câblés, la réalisation correspondante est décrite en référence à la figure 3. Le dispositif de codage représenté sur cette figure 3 comprend tout d'abord, dans l'exemple décrit, une voie de codage, comprenant elle-même en série un circuit 1 de transformation cosinus discrète (dite DCT), un circuit de quantification 2 (notée Q), et un circuit 3 de codage à longueur variable (dit codage VLC). Le circuit 1 de transformation DCT reçoit, par l'intermédiaire d'un soustracteur mentionné plus loin, des signaux numériques correspondant aux signaux vidéo d'entrée du dispositif de codage (obtenus, plus précisément, par différence entre ces signaux d'entrée et des signaux prédits présents sur l'autre entrée du soustracteur) et disponibles sous forme de blocs ici de format 8 x 8 points d'image. Ce circuit 1 convertit ces blocs de signaux en blocs de 8 x 8 coefficients, dont le premier représente la valeur moyenne des niveaux de gris du bloc considéré et les soixante-trois autres les différentes fréquences spatiales présentes dans ce bloc. Comme les informations portées par les images sont concentrées dans les basses fréquences, un nombre important de ces coefficients, ceux correspondant aux fréquences les plus élevées, est souvent nul. La transformation DCT assure donc une réduction sensible du nombre de coefficients à transmettre par bloc.

Le circuit 2 assure alors la quantification de chacun des coefficients non nuls de sortie du circuit 1 de transformation DCT, selon un pas de quantification qui, pour tenir compte du fait que les hautes fréquences spatiales sont moins perceptibles par l'oeil humain, est plus grand pour ces hautes fréquences que pour les basses fréquences. Cette quantification moins précise permet, en sacrifiant les coefficients les moins visibles, de réduire le débit des signaux (au détriment bien entendu de la précision de reconstitution de ces coefficients lors du décodage).

La suite des coefficients ainsi quantifiés, qui, en pratique, comprend un nombre important de zéros, tout particulièrement dans les hautes fréquences, est fournie au circuit 3 de codage VLC qui réduit encore le débit en affectant des mots de code plus courts au codage des symboles les plus fréquents et plus longs au codage des symboles les plus rares.

La voie de codage ainsi constituée (transformation DCT, quantification Q, codage VLC) réduit la redondance spatiale des signaux d'entrée, mais la compression de données obtenue est dans un rapport qui ne peut dépasser la valeur 10 environ. Une compression supérieure peut être atteinte si l'on tient alors compte de la redondance temporelle des signaux d'entrée, c'est-à-dire du fait que, dans une séquence d'images animées, les images successives se ressemblent beaucoup (les différences entre elles n'étant dues qu'aux mouvements). On ne transmettra alors que ces différences, après les avoir déterminées en soustrayant de l'image courante une image prédite reconstituée à partir d'une précédente image courante en tenant compte des mouvements intervenus. Plus précisément, une bonne prédiction d'image peut être obtenue par l'intermédiaire d'une estimation et d'une compensation du mouvement des objets mobiles. Le dispositif de codage de la figure 3 associe alors à cet effet à la voie de codage une voie dite de prédiction, comprenant elle-même en série un circuit de quantification inverse 4 (cette quantification inverse étant noté $Q^{-1}$), un circuit de transformation cosinus discrète inverse 5 (notée $DCT^{-1}$), un additionneur 6, une mémoire 7, un circuit 8 de compensation de mouvement à partir de l'image non compensée stockée dans ladite mémoire, et un soustracteur 9 effectuant la différence entre les signaux d'entrée et les signaux prédits disponibles en sortie du circuit 8 (ces signaux prédits étant également envoyés vers une deuxième entrée de l'additionneur 6), pour n'envoyer vers la voie de codage et ne traiter dans celle-ci que la différence entre ces signaux, compte tenu du mouvement intervenu entre l'image prédite (à partir de l'image précédente) et l'image d'entrée (ou image courante).

Le dispositif de codage de la figure 3 comprend enfin un sous-ensemble 15 de régulation du débit qui comprend lui-même, de façon classique, une mémoire-tampon 10, prévue en sortie du circuit 3 de codage à longueur variable, et un dispositif 11 de modification du pas de quantification. En fonction de l'état de remplissage de la mémoire-tampon, ce dispositif 11 modifie par un processus de rétroaction le pas de quantification utilisé dans le circuit 2, pour obtenir en sortie de cette mémoire le débit le plus constant possible.

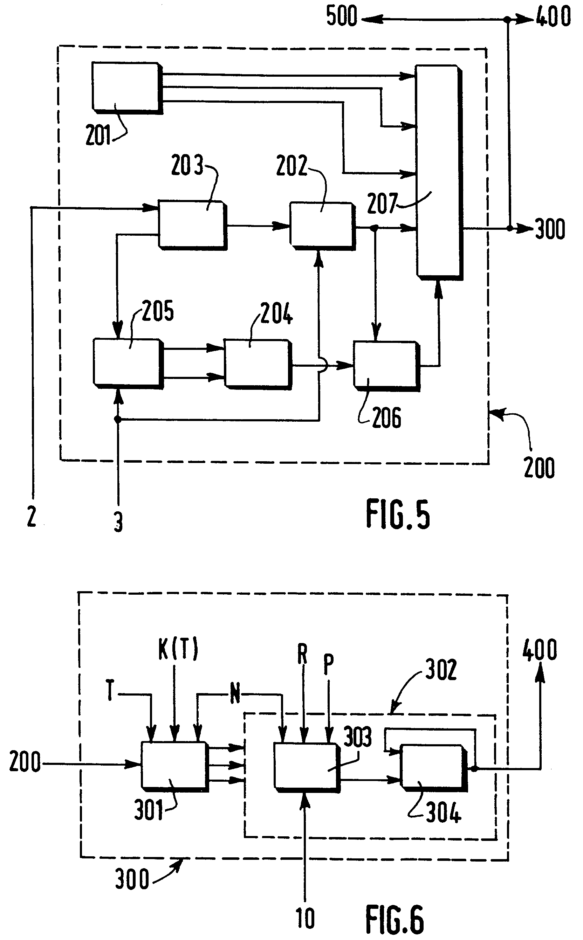

L'invention consiste à mettre en oeuvre, dans un tel dispositif de codage, un procédé de codage tel que décrit précédemment, qui permet effectivement de faire face à la situation où l'on change le débit du programme diffusé, sans aucune interruption du service de diffusion et de transmission. Pour cette mise en oeuvre selon l'invention, le sous-ensemble de régulation de débit du dispositif de codage de la figure 3 est modifié et comprend, à la place du dispositif 11, un dispositif 110 de modification du pas de quantification, représenté sur la figure 4. Ce dispositif 110 comprend différents étages 200 à 500 qui vont être maintenant successivement décrits en détail, ainsi que, dans une variante améliorée de ce dispositif, un étage d'appoint 600 qui ne sera décrit que plus loin.

Le dispositif de modification de pas de quantification 110 représenté sur la figure 4 comprend tout d'abord un étage 200 d'allocation de bits pour chaque image à coder. Cette allocation d'un certain nombre de bits à chaque image est effectuée, on l'a vu, en procédant à une estimation de sa complexité. Cette complexité peut être estimée par exemple de façon différente selon que l'image courante est de type I, P, ou B. Ce type T de l'image courante est reçu, comme indiqué sur la figure 4, par le dispositif 110, et provient des circuits (non représentés, car hors du domaine de l'invention) situés en amont du dispositif de codage. La complexité globale de l'image, notée X(T), est alors donnée par les expressions (1) ou (2) suivantes :

(a) si T = I ou B, on a :

$$X(T) = S_i(T) \cdot Q_i^m(T) \tag{1}$$

si T = P, on a :

$$X(T) = MIN[(S_i(T) \cdot Q_i^m(T)), (S_{i-1}(T) \cdot Q_{i-1}^m(T))] \tag{2}$$

Dans ces expressions, $S_i(T)$ et $S_{i-1}(T)$ désignent, on l'a vu, les nombres de bits consécutifs respectivement au codage de l'image courante et de l'image précédente de même type, et

$$Q_{i-1}^m(T), Q_i^m(T)$$

désignent les pas de quantification moyens correspondant respectivement à chacune de ces images précédente et courante, calculés en prenant la moyenne des valeurs des pas de quantification correspondant au codage de tous les macroblocs. Pour les images de type P, on peut prendre comme valeur de complexité la plus faible des deux dernières valeurs de complexité, ce qui permet d'atténuer les effets des changements de scène sur la qualité de l'image (en effet, la première image de type P qui suit un changement de scène présente toujours une valeur de complexité élevée et non représentative). Si la distinction entre images P et images I ou B n'est pas prise en compte, on choisit alors dans tous les cas l'expression (1) pour valeur estimée de la complexité. Par ailleurs, pour les premières images, des valeurs initiales de X(.) doivent être choisies, et les essais réalisés ont conduit à prendre, quel que soit le débit, les valeurs suivantes, en nombre de bits :

$$X_o(I) = 10000000$$
$$X_o(P) = 3500000$$
$$X_o(B) = 1200000.$$

Cette opération d'estimation de la complexité est réalisée, dans tous les cas, par l'étage 200. Comme le montre l'exemple de réalisation de la figure 5, cet étage 200 comprend tout d'abord une mémoire 201, contenant les valeurs d'initialisation $X_o(I)$, $X_o(P)$, $X_o(B)$. D'autre part, un premier circuit de multiplication 202 reçoit les grandeurs $S_i(T)$ et $Q_i^m(T)$ : le nombre de bits $S_i(T)$ est fourni directement par la sortie du circuit 3 de codage à longueur variable, et le pas de quantification moyen $Q_i^m(T)$ par un circuit 203 de calcul de ce pas moyen à partir des pas de quantification réels des macroblocs, qui sont transmis par le circuit de quantification 2. Un deuxième circuit de multiplication 204 reçoit les grandeurs $S_{i-1}(T)$ et

$$Q_{i-1}^m(T)$$

correspondant à l'image précédente de même type T que l'image courante et stockées temporairement dans une mémoire 205 qui, elle, les a reçues des circuits 3 et 203 comme précédemment. Un comparateur 206 effectue, seulement si T = P, la comparaison entre les produits $S_i.Q_i^m$ et

$$S_{i-1}.Q_{i-1}^m$$

et sélectionne, comme indiqué à l'aide de l'opérateur MIN[.] dans l'expression (2), la plus faible des deux valeurs comparées. Enfin, un circuit de sélection 207 à cinq entrées reçoit les trois sorties de la mémoire 201, celle du circuit de multiplication 202 et celle du comparateur 206, et, selon le type T et selon que l'image est ou non la première de la séquence, délivre l'un des signaux présents sur ces cinq entrées. Ce signal de sortie du circuit 207, qui constitue celui de l'étage 200, est donc le suivant :

(a) la valeur initiale $X_o(I)$, ou $X_o(P)$, ou $X_o(B)$, si l'image est, dans la séquence d'images, la première du type concerné ;
(b) le signal de sortie du premier circuit de multiplication 202, si l'image n'est plus, dans la séquence d'images, la première du type concerné et si T = I ou B ;
(c) le signal de sortie du comparateur 206, si l'image n'est plus, dans la séquence d'images, la première du type concerné et si T = P.

Si on n'opère pas de distinction entre les images P et les images I ou B, le circuit de multiplication 204 et la mémoire 205 ne sont pas prévus, et le circuit de sélection 207 ne comprend alors que quatre entrées, pour ne sélectionner qu'un signal parmi quatre, soit l'une des trois sorties de la première mémoire 201, soit la sortie du premier circuit de multiplication 202.

Le dispositif 110 de modification de pas de quantification comprend également, en série avec l'étage 200, comme le montre la figure 4, un étage 300 d'allocation de bits pour chaque groupe d'image. Cet étage 300, représenté sur la figure 6, comprend lui-même, tout d'abord, un circuit 301 de calcul de profil de GOP. Ce profil de GOP, qui consiste ici en un jeu de valeurs (une par type d'image T) déterminées au début du GOP et non modifiées tant qu'un nouveau GOP ne se présente pas, est donné par l'expression (3) :

$$PROF(T) = (x(T)/K(T)) . (NR(t)/P)/(\Sigma_k N(k).X(k)/K(k)) \tag{3}$$

Dans cette expression, on a :
- T = I, P, ou B ;
- X(T) a été défini précédemment ;
- K(T) est une constante définie une fois pour toutes et, dans la réalisation ici décrite, K(I) = K(P) = 1 et K(B) = 1,4 ;

- N = nombre d'images par GOP (on a par exemple, dans l'exemple ici décrit où N = 12, N(I) = 1, N-(P) = 5, et N(B) = 6) ;
- R(t) = débit instantané en sortie de la mémoire-tampon 10 ;
- P = période des images ;
- sous le signe $\Sigma$, k = T prend successivement le sens k = I, k = P, k = B ;
- N(k), avec k = successivement I, P, B, représente le nombre d'images de type I, P ou B (respectivement) dans le GOP concerné.

Les trois valeurs de PROF(T) ainsi obtenues en sortie du circuit 301 sont alors fournies, dans l'étage 300, à un circuit 302 d'estimation d'un nombre de bits (ou allocation) par GOP glissant, lui-même subdivisé, comme on le verra plus loin, en deux circuits 303 et 304. Deux situations peuvent alors se présenter : soit le débit R reste constant en sortie du dispositif de codage, soit une commande de changement de débit est intervenue, pour passer d'un débit $R_1$ à un débit $R_2$. On peut rappeler ici que, selon la norme MPEG, un espace est périodiquement réservé pour une information sur le débit, dans les en-têtes de séquence du flot des signaux numériques. Dans cet en-tête, soit on indique la valeur du débit R, soit, selon une variante de réalisation, on indique que ce débit est variable, et sa valeur n'est précisée qu'en un deuxième emplacement situé postérieurement à cet espace réservé. Une commande de commutation de débit à l'instant t = to entraîne alors la modification de R soit dans tous les en-têtes de séquence postérieurs à to, soit dans tous ces deuxièmes emplacements situés postérieurement, et ceci jusqu'à une nouvelle commutation de débit, et ainsi de suite. On supposera ici, par exemple, que cette commande de changement de débit de $R_1$ à $R_2$ n'est prise en compte par le dispositif de codage qu'à un instant t = to correspondant au début d'un GOP réel du flot de données (même si l'ordre est antérieur à ce début de GOP réel, on ne la valide qu'à cet instant $t_o$). On va alors estimer le nombre de bits, pour ce GOP qui commence, en se basant sur l'hypothèse que l'état de remplissage de la mémoire-tampon 10 du dispositif de codage doit être aussi faible que possible au début de chaque GOP réel. Cette hypothèse est justifiée par le fait que le codage d'un GOP réel commence par le codage d'une image intra (de type I) et qu'une telle image requiert une part importante de l'allocation globale dudit GOP.

Dans la première situation où le débit R est constant, cette allocation globale, ou nombre de bits alloué, est donnée par l'expression (4) suivante (la notation NBRG a été choisie à partir des termes anglais désignant cette grandeur : Number of Bits per Real GOP):

$$NBRG_c = (NR(t)/P) + WBF_c - F_e(GOPST) \tag{4}$$

dans laquelle :
- N, R(t), P ont déjà été définies ;
- $WBF_c$ (Wished Buffer Fullness) représente, en nombre de bits, l'état de remplissage souhaité, à débit constant, pour la mémoire-tampon 10 au début de chaque GOP réel, c'est-à-dire au début de la première tranche active de sa première image ;
- $F_e(GOPST)$ désigne, en nombre de bits, l'état de remplissage réel de la mémoire-tampon 10 au début dudit GOP réel (GOPST : GOP Start), et est fourni par ladite mémoire.

Dans la deuxième situation où le débit passe d'une valeur $R_1$ à une valeur $R_2$ (à l'instant t = $t_o$ et au début d'un GOP réel), l'allocation globale $NBRG_v$ (Number of Bits per Real GOP, à débit variable) de ce GOP réel est maintenant donnée par l'expression (5) suivante :

$$NBRG_v = (NR_2/P) + WBF_v - F_e(GOPST) + (R_1 - R_2)\,D_b \tag{5}$$

dans laquelle :
- $WBF_v$ représente, maintenant l'état de remplissage souhaité, compte tenu du changement de débit, pour la mémoire-tampon 10 au début de chaque GOP réel ;
- $D_b$, dans le terme supplémentaire $(R_1-R_2)D_b$, désigne le retard constant entre l'instant d'entrée des données (codées dans le circuit 3 de codage VLC) dans la mémoire-tampon 10 et l'instant où les données décodées correspondantes sortent de la mémoire-tampon présente dans le décodeur dans le cas où le circuit de codage et le circuit de décodage correspondant seraient directement connectés l'un à l'autre.

Ce retard $D_b$ est, on peut le noter, la somme, maintenue constante, des retards introduits par les mémoires-tampons du dispositif de codage et du dispositif de décodage correspondant quelle que soit la durée réelle du retard, variable, dû à la transmission et du retard supplémentaire ajouté à ce dernier au niveau du dispositif de décodage pour justement en compenser le caractère variable (on notera qu'en faisant R = $R_1$ = $R_2$ dans l'expression générale (5), on retrouve bien l'expression (4) de $NBRG_c$ à débit constant).

Comme il est souhaitable, on l'a vu, que l'état de remplissage de la mémoire-tampon 10 au début d'un GOP soit aussi faible que possible, on définira WBF, état de remplissage souhaité, par l'expression suivante (6) :

$$WBF = F_{min}(t) + 4R(t)/(P \times NBSP) \qquad (6)$$

Dans cette expression, NBSP est le nombre de tranches par image (NumBer of Slices per Picture), et $F_{min}$-(t) est la limite inférieure théorique de l'état de remplissage de la mémoire-tampon du dispositif de codage pour que la mémoire-tampon du dispositif de décodage correspondant ne déborde pas (situation de débordement, ou "d'overflow" comme indiqué plus haut).

Cette limite $F_{min}(t)$, désignée sous la forme d'une fonction du temps t pour exprimer le fait qu'elle est susceptible de varier à chaque commutation de débit, pourrait par exemple prendre une valeur constante proportionnelle à chaque débit souhaité. D'une manière plus générale, $F_{min}(t)$ est déterminée à l'aide d'un circuit 305 de calcul des limites de sécurité de mémoire, et comme indiqué maintenant. Si l'on appelle e(t) la fonction du temps représentant le débit instantané à l'entrée de la mémoire-tampon 10 (c'est-à-dire en sortie du circuit 3 de codage à longueur variable), l'état de remplissage instantané (à un instant t) de cette mémoire-tampon 10 du dispositif de codage, désigné par EBF(t) (Encoder Buffer Fullness), est égal à la différence entre les débits à la sortie et à l'entrée de la mémoire-tampon 10 et donc donné par l'expression (7) :

$$EBF(t) = \int_{o}^{t} e(x).dx - \int_{o}^{t} R(x).dx \qquad (7)$$

où R( . ), on l'a vu, est la fonction exprimant le débit instantané en sortie de la mémoire-tampon 10 (on suppose par ailleurs que cette mémoire était vide à l'origine des temps t = O et que e(t) = R(t) = O pour tout t négatif).

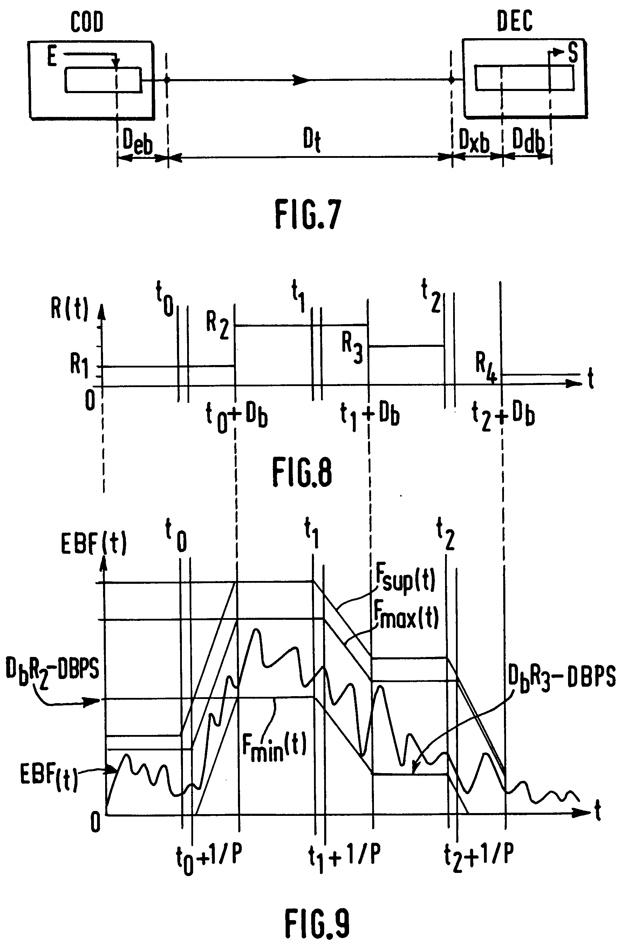

Par ailleurs, pour satisfaire la contrainte (a) citée précédemment (fonctionnement correct en temps réel), on doit supposer qu'il existe un retard constant D entre l'entrée des données dans la mémoire-tampon 10 du dispositif de codage et le début de leur décodage. Or, comme indiqué sur la figure 7, ce retard D peut être décomposé en quatre retards distincts, selon l'expression (8) suivante :

$$D = D_{eb} + D_t + D_{xb} + D_{db} \qquad (8)$$

dans laquelle :
- $D_{eb}$ représente, côté codage (COD), le retard dû à la mémoire-tampon 10 (Encoder Buffer) du dispositif de codage (le point E désigne le point d'entrée des données dans ladite mémoire) ;
- $D_t$ représente le retard dû à la transmission et à toutes les opérations associées (telles que multiplexage ou démultiplexage) ;
- $D_{xb}$ représente, côté décodage (DEC), un retard prévu pour compenser les variations de $D_t$ (on aura donc, en permanence $D_t + D_{xb}$ = constante) ;
- $D_{db}$ représente, côté décodage, le retard dû à la mémoire-tampon (Decoder Buffer) prévue avant le circuit de décodage à longueur variable (on peut remarquer ici qu'en fait la distinction entre $D_{xb}$ et $D_{db}$ est purement théorique, ces retards étant l'un et l'autre introduits par la même mémoire).

Puisque $D_t + D_{xb}$ = constante, on doit aussi avoir, pour que le décodage soit régulier (ou sans à-coups, en anglais "seamless decoding"), l'égalité (9) suivante :

$$D_{eb} + D_{db} = \text{constante} \ (= D_b) \qquad (9)$$

Ce paramètre $D_b$, défini plus haut, est, pour un dispositif de codage déterminé, fixé par celui-ci et ensuite imposé au dispositif de décodage correspondant.

De même qu'on a déterminé plus haut l'état de remplissage instantané EBF(t) de la mémoire-tampon 10, on peut aussi définir l'état de remplissage instantané DBF(t) (Decoder Buffer Fullness) de la mémoire dite de décodage présente dans le dispositif de décodage. Comme pour l'état EBF(t), cet état DBF(t) est déterminé à partir de la différence entre les débits instantanés à l'entrée et en sortie de la mémoire de décodage (le point S désigne sur la figure 7 le point de sortie des données de ladite mémoire), selon l'expression (10) :

$$DBF(t+D) = \int_{o}^{t+D} R(x-D_t-D_{xb}).dx - \int_{o}^{t+D} d(x).dx \qquad (10)$$

Dans cette expression, d(x) désigne le débit instantané en sortie de la mémoire de décodage, et $R(x-D_t-D_{xb})$, débit instantané à l'entrée de cette même mémoire, est égal à celui en sortie de la mémoire-tampon 10 décalé du temps $D_t + D_{xb}$ (ces retards sont ceux de transmission et de compensation, définis plus haut).

Comme R(t) = O pour t < O, on a donc :

$$\int_{o}^{t+D} R(x-D_t-D_{xb}) = \int_{D_t+D_{xb}}^{t+D} R(x-D_t-D_{xb})$$

et comme d(t) = O pour t < D, on a également :

$$\int_{o}^{t+D} d(x).dx = \int_{D}^{t+D} d(x).dx$$

d'où :

$$DBF(t+D) = \int_{D_t+D_{xb}}^{t+D} R(x-D_t-D_{xb}).dx - \int_{D}^{t+D} d(x).dx \qquad (11)$$

Cette expression est équivalente à :

$$DBF(t+D) = \int_{o}^{t+D_b} R(x).dx - \int_{o}^{t} d(x+D).dx \qquad (12)$$

Bien que ne connaissant pas exactement la façon dont le dispositif de décodage travaille instantanément, on peut supposer que l'on a :

$$d(t+D) = e(t) \qquad (13)$$

En effet, les intégrales sur une période complète d'image de chacune de ces deux grandeurs sont égales (il s'agit du nombre de bits correspondant à l' image codée). On arrive donc à l'expression (14) :

$$DBF(t+D) = \int_{o}^{t+D_b} R(x).dx - \int_{o}^{t} e(x).dx \qquad (14)$$

qui peut aussi être écrite sous la forme (15) :

$$DBF(t+D) = \int_{t}^{t+D_b} R(x).dx - EBF(t) \qquad (15)$$

En fait, cette expression (15) n'est exacte que lorsque t correspond à l'instant, noté $t_{end}$, où le codage de l'image courante décodée s'était achevé. Sous réserve de cette hypothèse et de celle selon laquelle tous les bits correspondant à une image sont supposés être instantanément extraits de la mémoire de codage et présents dans celle de décodage lorsque le décodage de cette image commence, l'expression (12) devient

:

$$DBF(t+D) = \int_{o}^{t+D_b} R(x).dx - \int_{o}^{t_{end}} e(x).dx \qquad (16)$$

(t étant un instant quelconque pris dans l'intervalle $[(t_{end} - 1/P), t_{end}]$ et P désignant la fréquence des images), ou encore :

$$DBF(t+D) = \int_{t_{end}}^{t+D_b} R(x).dx - EBF(t_{end}) \qquad (17)$$

Pour un fonctionnement correct du dispositif de décodage, la contrainte qui doit être respectée côté décodage est donnée par l'expression (18) suivante :

$O \leq DBF(t) \leq DBPS$ (quel que soit t) (18) dans laquelle DBPS (Decoder Buffer Physical Size) désigne la taille réelle (ou physique) de la mémoire de décodage. Ce qui donne, pour la première condition $DBF(t) > O$ et en tenant compte de l'expression (17) :

$$EBF(t_{end}) \leq \int_{t_{end}}^{t+D_b} R(x).dx \qquad (19)$$

quel que soit t inclus dans l'intervalle défini ci-dessus. En tenant compte de la deuxième condition $DBF(t) < DBPS$ et de l'expression (17), il vient cette fois :

$$DBPS \geq \int_{t_{end}}^{t+D_b} R(x).dx - EBF(t_{end}) \qquad (20)$$

soit :

$$EBF(t_{end}) \geq \int_{t_{end}}^{t+D_b} R(x).dx - DBPS \qquad (21)$$

quel que soit t inclus dans le même intervalle que précédemment. De ces conditions et du fait que R est une fonction du temps positive, il vient respectivement :

$$EBF(t_{end}) \leq \int_{t_{end}}^{t_{end}-1/P+D_b} R(x).dx \qquad (22)$$

$$EBF(t_{end}) \geq \int_{t_{end}}^{t_{end}+D_b} R(x).dx - DBPS \qquad (23)$$

Ces deux dernières expressions (22) et (23) montrent que, pour un décodage correct (garantissant effectivement que l'état de remplissage de la mémoire de décodage reste compris entre les limites (O, DBPS)), il suffit que les deux contraintes qui s'exercent, en amont, sur l'état de remplissage de la mémoire-tampon du dispositif de codage soient satisfaites simplement à la fin de chaque période d'image.

Une variante de réalisation consiste à demander que ces contraintes soient satisfaites à n'importe quel moment. Les expressions (22) et (23) deviennent alors les expressions (24) et (25) :

$$EBF(t) \leq \int_{t}^{t+D_b-1/P} R(x).dx \qquad (24)$$

$$EBF(t) \geq Max(0, \int_{o}^{t+D_b} R(x).dx-DBPS) \qquad (25)$$

les termes à droite des signes $\leq$ et $\geq$ dans ces expressions (24) et (25) pouvant être respectivement appelés $F_{max}(t)$ et $F_{min}(t)$ (dans l'expression (25), on utilise l'opérateur Max pour sélectionner comme limite inférieure la valeur "O" si

$$\int_{o}^{t+D_b} R(x).dx-DBPS$$

est négatif).

Cette limite $F_{min}(t)$ est celle qui apparaissait dans l'expression (6), et que l'on voulait déterminer. On remarquera que $F_{min}(t)$ varie en cas de commutation de débit et que sa détermination à un instant $t_o$ implique de connaître les valeurs prises par la fonction R sur l'intervalle $[t_o, t_o + D_b]$. Il en résulte, dans le cas de débits commutables, que les limites concrètement fixées à EBF(t) pour permettre un décodage correct doivent commencer à changer avant la commutation effective du débit de transmission, à un instant situé à un intervalle de temps $D_b$ en avance sur cet instant de commutation de débit de transmission.

Si on suppose alors, dans le cas de débits commutables d'une première à une deuxième valeur, que le débit de transmission a une valeur initiale $R(t) = R_1$, quel que soit $t < t_o + D_b$, et une valeur finale (après commutation) $R(t) = R_2$, quel que soit $t \geq t_o + D_b$, la limite inférieure de l'état de remplissage EBF(t) de la mémoire-tampon 10 du dispositif de codage est définie :

(a) pour tout $t < t_o$, par l'expression (26) :

$$F_{min}(t) = MAX (O, (D_bR_1-DBPS)) \qquad (26)$$

(b) pour tout $t \geq t_o + D_b$, par l'expression (27) :

$$F_{min}(t) = MAX (O, (D_bR_2-DBPS)) \qquad (27)$$

(c) pour tout t compris dans l'intervalle $[t_o, t_o + D_b]$, par l'expression (28), traduisant, pendant ce temps de transition d'un débit à l'autre, une variation linéaire entre les valeurs $F_{min}(t)$ obtenues dans les deux cas (a), (b) précédents :

$$F_{min}(t) = MAX (O, (D_bR_1 + (t-t_o)(R_2-R_1)-DBPS)) \qquad (28)$$

De même, la limite supérieure de cet état de remplissage EBF(t) est définie de la façon suivante :
(a) pour tout $t < t_o$, par l'expression (29) :

$$F_{max}(t) = (D_b- 1/P).R_1 \qquad (29)$$

(b) pour tout $t \geq t_o + D_b$, par l'expression (30) :

$$F_{max}(t) = (D_b- 1/P).R_2 \qquad (30)$$

(c) pour tout t compris dans l'intervalle $[t_o, t_o + D_b]$, par l'expression (31) traduisant, pendant ce temps de transition d'un débit à l'autre, une variation linéaire entre les valeurs $F_{max}(t)$ obtenues dans les deux cas (a), (b) précédents :

$$F_{max}(t) = (D_b-1/P).R_1 + (t-t_o-1/P).(R_2-R_1) \qquad (31)$$

En outre, si l'on appelle $F_{sup}(t)$ la fonction du temps égale à

$$\int_{t}^{t+D_b} R(x)\,dx,$$

cette limite, dans ce même cas des débits commutables de $R_1$ à $R_2$, est également définie de la façon suivante :

(a) pour tout $t < t_o$, par l'expression (32) :

$$F_{sup}(t) = D_b R_1 \tag{32}$$

(b) pour tout $t \geq to + D_b$, par l'expression (33) :

$$F_{sup}(t) = D_b R_2 \tag{33}$$

(c) pour tout $t$ compris dans l'intervalle [to, $t_o + D_b$], par l'expression (34) traduisant, pendant le temps de transition d'un débit à l'autre, une variation linéaire similaire entre les valeurs $F_{sup}(t)$ obtenues dans les deux cas (a), (b) précédents :

$$F_{sup}(t) = D_b R_1 + (t-t_o).(R_2-R_1) \tag{34}$$

On notera ici que la différence $F_{sup}(t) - F_{min}(t)$, désignée par la référence DBES (Decoder Buffer Effective Size), représente la partie de la mémoire de décodage (de taille réelle DBPS) qui est effectivement utilisée.

Les figures 8 et 9 illustrent les variations de ces limites $F_{min}(t)$, $F_{max}(t)$, $F_{sup}(t)$ dans le cas de débits commutables. La figure 8 représente, dans un repère comprenant des axes (t, R(t)), quatre débits $R_1$, $R_2$, $R_3$, $R_4$ successivement imposés en sortie de la mémoire-tampon 10, et l'on appelle respectivement $t_o$, $t_1$, $t_2$ les instants auxquels un ordre de commutation de débit (respectivement de $R_1$ à $R_2$, de $R_2$ à $R_3$, de $R_3$ à $R_4$) est survenu. La figure 9 représente, dans un repère comprenant des axes (t, EBF(t)) et en correspondance avec la figure 8 en ce qui concerne les instants référencés sur l'axe des temps, les variations de l'état réel EBF(t) de remplissage de la mémoire-tampon 10 entre les limites $F_{min}(t)$ et $F_{max}(t)$ définies pour chaque valeur de débit (y compris pendant les périodes transitoires dites de commutation où la variation de ces limites est linéaire d'un palier-limite au suivant) compte tenu des différents débits imposés $R_1$, $R_2$, $R_3$, etc....

Dans l'exemple ici décrit d'un codeur compatible avec le standard MPEG2, profil principal (on sait en effet que ce standard de compression de données est, à l'heure présente, caractérisé par ce qu'on appelle trois profils -eux-mêmes subdivisés en niveaux- qui sont un reflet de la plus ou moins grande complexité de traitement desdites données, sous la forme de paramètres tels que la taille ou la période des images, le nombre de pixels par seconde, le débit, etc...), le débit en sortie de la mémoire-tampon 10 n'est pas supérieur à 15 Mbits/seconde, et la taille réelle de la mémoire de décodage est 1835008 bits. Des essais ont été réalisés par exemple avec $D_b$ = 240 ms (soit, à 50 Hz, six périodes d'image), et les limites $F_{min}(t)$ et $F_{max}(t)$ de EBF(t) sont alors, pour quelques exemples de débits, respectivement les suivants :

(a) 2 Mbits/s : 0 et 400000 bits ;
(b) 3,5 Mbits/s : 0 et 700000 bits ;
(c) 6 Mbits/ : 0 et 1200000 bits ;
(d) 7,65 Mbits/s : 992 bits et 1530000 bits ;
(e) 15 Mbits/s : 1764 992 bits et 3000000 bits;

En fait, une valeur de $D_b$ trop faible pourrait conduire à une valeur de taille réelle de la mémoire-tampon 10 qui serait trop faible aux bas débits (ce qui affecterait la qualité d'image), et l'on a plutôt choisi pour valeur de retard $D_b$ = 280 ms (soit, à 50 Hz, sept périodes d'image), et les limites $F_{min}(t)$, $F_{max}(t)$ deviennent alors respectivement, pour les mêmes exemples de débits :

(a) 2 Mbits/s : 0 et 480000 bits ;
(b) 3,5 Mbits/s : 0 et 840000 bits ;
(c) 6 Mbits/ : 0 et 1440000 bits ;
(d) 7,65 Mbits/s : 1792 bits et 1574400 bits ;
(e) 15 Mbits/s : 2364992 et 3600000 bits;

En définitive, une solution intéressante consiste alors à prévoir un dispositif de codage dans lequel le paramètre $D_b$ est réglable, de telle façon que les autres paramètres qui dépendent de $D_b$ soient eux aussi

17

automatiquement ajustés.

Le mode de détermination de $F_{min}(t)$ étant ainsi précisé quelle que soit la situation relative au débit en sortie du dispositif de codage, on peut maintenant, connaissant $NBRG_C$ ou $NBRG_V$, évaluer au début de chaque nouvelle image le nombre de bits par GOP glissant NBSG, conformément à l'expression (35) suivante :

$$NBSG = NBSG - NBPP + PROF(T) \qquad (35)$$

dans laquelle les grandeurs ont déjà été définies plus haut.

En ce qui concerne NBSG, on rappellera ici, comme on l'a vu dans le cas de la description du procédé selon l'invention, que l'expression (35) est à interpréter au sens d'une instruction informatique, c'est-à-dire comme un ordre de transfert de valeur : l'exécution de l'opération d'affectation = indiquée signifie que le contenu du terme situé à gauche de l'opérateur = doit être remplacé, lorsque ladite opération est terminée, par le contenu du terme situé à sa droite. Il faut donc distinguer d'une part la valeur initiale de NBSG et d'autre part ses valeurs ultérieures successives. Ladite valeur initiale notée $NBSG_O$ est l'allocation globale NBRG pour le GOP réel concerné, ce que traduit l'expression suivante :

$$NBSG = NBSG_O = NBRG \qquad (36)$$

dans laquelle NBRG représente indifféremment $NBRG_c$ ou $NBRG_v$ (l'expression (35) est valable dans les deux cas : débit constant, ou débit variable). Une fois cette valeur initiale de NBSG déterminée, c'est l'expression (35) qui est pleinement applicable, indiquant qu'une mise à jour est effectuée à chaque image, en remplaçant le terme NBSG par le terme NBSG-NBPP + PROF(T), qui donne lesdites valeurs ultérieures successives.

Le circuit 302 d'estimation d'un nombre de bits par GOP glissant comprend donc d'une part un circuit 303 de calcul du nombre de bits global NBRG alloué par GOP réel (ce nombre NBRG étant égal à $NBRG_c$ ou à $NBRG_v$ selon que le débit est constant ou qu'il vient de changer), et d'autre part un circuit 304 de calcul du nombre de bits par GOP glissant NBSG, qui reçoit les sorties des circuits 301 et 303 et celle du circuit 304 lui-même et délivre un signal qui est le signal de sortie de l'étage 300 d'allocation de bits pour chaque groupe d'image.

Ce signal de sortie est fourni à un étage 400 de correction d'allocation de bits pour chaque nouvelle image, prévu en série avec l'étage 300 et qui comprend lui-même tout d'abord un circuit 401 d'évaluation d'allocation d'image. Ce circuit 401 permet de déterminer la valeur NBNP du nombre de bits estimé pour le codage de la prochaine image du groupe d'image, selon l'expression (37) suivante :

$$NBNP(T) = MAX\left[10000, \frac{X(T) \; x \; NBSG(T)}{K(T) \; x \; \sum_{k=I,P,B} N(k).X(k).K(k)}\right] (37)$$

expression dans laquelle toutes les grandeurs ont été définies précédemment (la valeur 10000 sera, elle, justifiée plus loin). Le circuit 401 reçoit à cet effet d'une part la sortie du circuit de sélection 207 de l'étage 200, d'autre part celle du circuit 304 de calcul du nombre de bits par GOP glissant.

La sortie de ce circuit 401 est fournie à un circuit 402 de correction d'allocation qui détermine la valeur corrigée CNNP(T) du nombre de bits envisagé pour le codage de ladite prochaine image du groupe d'image, selon l'expression (38) suivante :

$$CNNP(T) = CLIP(NBNP(T), MIN(CN), MAX(CN)) \qquad (38)$$

Dans cette expression, NBNP(T) est fourni par le circuit 401. Les grandeurs MIN(CN) et MAX(CN) sont respectivement définies par les expressions (39) et (40) suivantes :

$$MIN(CN) = F_{min}(t) + R/P - F_e(PICST) + 4R/(P \times NBSP) \qquad (39)$$
$$MAX(CN) = F_{sup}(t) - F_e(PICST) - (K_m.R)/(P \times NBSP) \qquad (40)$$

dans lesquelles :
- $F_e(PICST)$ désigne, en nombre de bits, l'état de remplissage réel de la mémoire-tampon 10 au début de l'image (c'est-à-dire au début de sa première tranche active, un certain nombre de tranches ne participant pas de façon active à l'image, mais correspondant simplement à des données relatives aux temps de retour ligne, trame, etc...)
- $F_{sup}(t)$ est elle-même déterminée par l'expression (41) suivante :

$$F_{sup}(t) = \int_{t}^{t+D_b} R(x).dx \qquad (41)$$

- $K_m$ est une constante liée au nombre de tranches non actives ;
- les autres grandeurs ont déjà été définies.

La fonction CLIP(NBNP(T), MIN(CN), MAX(CN)) consiste alors, on l'a vu, à choisir parmi les trois valeurs possibles NBNP(T), MIN(CN), MAX(CN) celle qui est comprise entre les deux autres, c'est-à-dire la première si NBNP(T) est compris entre les deux autres, ou la seconde si NBNP(T) lui est inférieure, ou la troisième si NBNP(T) lui est supérieure.

Le dispositif 110 de modification du pas de quantification de la figure 4 comprend enfin, en série avec l'étage 400, un étage 500 de modification du pas de quantification. Cet étage 500 comprend lui-même tout d'abord un circuit 501 d'initialisation de l'état de remplissage de la mémoire-tampon virtuelle. Cette mémoire-tampon n'existe pas physiquement dans le dispositif de codage, mais son état de remplissage est une notion concrète dont le calcul est utile pour actualiser le pas de quantification au fur et à mesure du codage de chaque image. L'état de cette mémoire virtuelle doit être initialisé au début de chaque image de type T de telle manière que le pas de quantification initial soit adapté au nombre de bits approprié pour cette image courante. Cet état initial ISVB est ici déterminé selon l'expression (42) :

$$ISVB = X(T)/(CNNP(T) \times REAC) \qquad (42)$$

dans laquelle X(T) et CNNP(T) ont déjà été définis et REAC est un paramètre de rétroaction, ici égal à 512/R, qui permet de doser plus ou moins l'importance de la rétroaction effectuée par le sous-ensemble de régulation de débit. Après cette initialisation, l'état courant CSVB (Current State of the Virtual Buffer) de ladite mémoire, c'est-à-dire son état juste avant que ne commence le codage d'un j-ième macrobloc (j étant un entier positif), est alors donné par l'expression (43) suivante :

$$CSVB = ISVB + PBAD -(CNNP(T) \times (j-1)/NMBP) \qquad (43)$$

dans laquelle :
- ISVB, PBAD, CNNP(T), j ont déjà été définis ;
- NMBP (Number of Macroblocs per Picture) est le nombre total de macroblocs par image.

Cette détermination de CSVB est effectuée par un circuit 502 de calcul d'état de remplissage courant de ladite mémoire-tampon virtuelle, qui reçoit la sortie du circuit 501 d'initialisation d'état de remplissage, la sortie du circuit 3 de codage VLC, et la sortie du circuit 402 de correction d'allocation d'image. Ce circuit 502 est suivi d'un circuit 503 de détermination du pas de quantification du j-ième macrobloc, ce pas Q(j) étant fourni par l'expression (44) suivante :

$$Q(j) = CSVB \times REAC \qquad (44)$$

dans laquelle REAC est le paramètre prédéterminé de rétroaction déjà rencontré dans l'expression (42). Le pas de quantification ainsi évalué conformément à l'invention est alors soit directement applicable au macrobloc courant, soit modifiable, avant cette application, par une prise en compte de l'activité locale dans l'image (c'est-à-dire par un processus de quantification adaptative, tout à fait classique et donc non décrit ici).

Bien entendu, la présente invention n'est pas limitée aux exemples de réalisation ci-dessus décrits, à partir desquels des variantes ou perfectionnements peuvent être envisagés sans pour cela sortir du cadre de l'invention.

On rappellera en particulier que le procédé et le dispositif décrits jusqu'à présent avaient pour effet de maintenir l'état de remplissage de la mémoire-tampon 10 dans des limites permettant à la fois un fonctionnement correct et l'obtention, au décodage, d'une bonne qualité d'image. A ce titre, les essais effectués ont confirmé l'efficacité de la solution technique proposée. On ne peut cependant pas exclure, bien que ce soit certainement très rare, que les conditions de transmission des signaux soient très défavorables et que des problèmes apparaissent en liaison avec ledit état de remplissage. Il est alors judicieux de proposer des améliorations permettant de faire face à ces cas extrêmes où la mémoire de décodage risquerait d'être en situation de débordement, ou au contraire de pénurie, de données.

Dans la première de ces deux situations extrêmes (débordement de la mémoire de décodage), correspondant au cas où la mémoire-tampon 10 du dispositif de codage voit son état de remplissage diminuer au point d'être tout proche de la limite inférieure donnée par l'expression (25) définie plus haut, il est prévu d'introduire dans ladite mémoire-tampon des bits dits de bourrage (en anglais "stuffing bits") dont le nombre est par exemple calculé par tranche d'image. Ce nombre NSTB (Number of Stuffing Bits) au début de chaque tranche est donné par l'expression (45) suivante :

$$NSTB = MAX (O,(F_{min}(SLE)-EBF(SLST) + 2R(t)/P)) \qquad (45)$$

dans laquelle :
- $F_{min}(SLE)$ est la valeur qu'aura $F_{min}$ à la fin de la tranche (SLice End) ;
- EBF(SLST) est la valeur de EBF au début de la tranche (SLice STart) ;
- P a déjà été défini.

Si NSTB est positif (et si la tranche concernée est une tranche active), l'état initial ISVB calculé précédemment (expression (41)) est réduit d'un certain pas, selon l'expression (46) suivante :

$$ISVB = ISVB - 2/REAC \qquad (46)$$

L'opération de bourrage est réalisée dans un étage 600 de traitements complémentaires. Cet étage d'appoint 600, représenté sur la figure 4 comme les étages de base 200 à 500, comprend ici un premier circuit 601 de traitement en cas de pénurie de données codées, prévu pour calculer le nombre NSTB (selon l'expression (45) ci-dessus) et pour commander, par l'intermédiaire d'une connexion reliant la sortie de ce circuit 601 au circuit 501 d'initialisation d'état de remplissage de la mémoire virtuelle, la diminution de la valeur de l'état initial ISVB.

De même, dans la deuxième situation (pénurie de données au niveau de la mémoire de décodage), correspondant au cas où la mémoire-tampon 10 du dispositif de codage voit son état de remplissage augmenter au point d'être tout proche de la limite supérieure donnée par l'expression (24), il est prévu de mettre à zéro, pendant toute la tranche d'image concerné, tous les coefficients issus de la transformation DCT (à l'exception du premier, correspondant à la composante continue) et d'augmenter l'état initial ISVB, selon le même pas que précédemment, c'est-à-dire conformément à l'expression (47) suivante :

$$ISVB = ISVB + 2/REAC \qquad (47)$$

Cette opération est également réalisée par l'étage 600 de traitements complémentaires qui comprend à cet effet un deuxième circuit 602 de traitement en cas de débordement des données codées. Lorsque ce circuit 602 constate que l'expression (24) n'est plus vérifiée, c'est-à-dire que EBF(t) dépasse $F_{max}(t)$, il commande, par l'intermédiaire d'une première connexion reliant la sortie de ce circuit 602 au circuit 1 de transformation cosinus discrète, la mise à zéro des coefficients et, par l'intermédiaire d'une deuxième connexion reliant la sortie du circuit 602 au circuit 501 d'initialisation d'état de remplissage de la mémoire virtuelle, l'augmentation de la valeur de l'état initial ISVB.

**Revendications**

1. Procédé de codage de signaux numériques représentatifs d'une séquence d'images organisée en groupes successifs de N images chacun et subdivisées en tranches regroupant chacune un certain nombre de macroblocs d'image, comprenant au moins une étape de quantification et de codage desdits signaux et une étape de régulation du débit des signaux codés par calcul d'une grandeur dite complexité de l'image et modification du pas de quantification des signaux à coder en fonction de la complexité ainsi calculée, caractérisé en ce que :

(A) ladite complexité est définie comme un nombre de bits par image proportionnel au nombre de bits observé à l'issue du codage ;

(B) l'étape de régulation de débit comprend les sous-étapes suivantes :

(1) pour chaque groupe déterminé de N images successives, évaluation d'un nombre de bits dit profil du groupe, de valeur PROF proportionnelle à ladite complexité, au nombre N et au débit R-(t) observé en sortie du codage, et inversement proportionnelle à la période des images ;

(2) pour chaque nouvelle image courante à coder de la séquence :

(a) estimation d'un nombre de bits correspondant à cette image et de valeur NBNP proportionnelle :

- d'une part à ladite complexité ;
- d'autre part à un nombre de dits par groupe dit glissant, de valeur NBSG elle-même proportionnelle audit profil de groupe et à la différence entre la valeur de NBSG pour l'image précédente et le nombre total de bits par image, chaque groupe dit glissant étant défini comme composé de ladite nouvelle image et de (N-1) images adjacentes à celle-ci formant avec elle un groupe se décalant d'une image à chaque nouvelle image ;

(b) correction de ladite estimation, par évaluation d'un nombre de bits corrigé correspondant à cette même image, de valeur CNNP choisie parmi trois valeurs comprenant la valeur estimée NBNP ainsi que deux valeurs-limites MIN(CN) et MAX(CN) d'état de remplissage d'une mémoire-tampon de stockage des signaux codés, le critère de choix étant la sélection de celle des valeurs qui est comprise entre les deux autres ;

(3) pour chaque macrobloc de ladite nouvelle image, calcul d'un coefficient de modification du pas de quantification de ce macrobloc, ledit coefficient étant égal ou proportionnel à la somme d'un nombre de bits exprimant l'état initial de remplissage d'une mémoire-tampon dite virtuelle et d'un nombre complémentaire égal au nombre de bits déjà engendrés par le codage des (j-1) macroblocs précédant le macrobloc concerné, de rang j, dans la même image, diminuée d'un nombre de bits correcteur lié aux valeurs de j et de CNPP et au nombre de macroblocs par image.

2. Procédé de codage selon la revendication 1, caractérisé en ce que chaque groupe glissant est composé, pour chaque nouvelle image, de cette image et des (N-1) images qui la suivent.

3. Procédé de codage selon l'une des revendications 1 et 2, caractérisé en ce que ladite complexité, notée X, est définie comme égale au produit du nombre de bits observé à l'issue du codage par le pas de quantification moyen sur une image.

4. Procédé de codage selon la revendication 3, caractérisé en ce que, lorsque les images de la séquence sont de type T différent dit I, P, ou B respectivement selon qu'il leur est appliqué un mode de codage dit intra indépendant de toute autre image, ou un mode de codage dit prédictif utilisant une prédiction de mouvement unidirectionnelle à partir d'une autre image intra ou prédite, ou un mode de codage à interpolation bidirectionnelle à partir d'une image antérieure et d'une image postérieure, ladite complexité, notée X(T), est définie comme égale au produit du nombre de bits $S_i(T)$ observé à l'issue du codage d'une image de même type T par le pas de quantification moyen $Q_i^m(T)$ sur une image de même type T.

5. Procédé de codage selon la revendication 4, caractérisé en ce que, lorsque les images sont de type P, ladite complexité est définie comme égale au plus faible desdits produits $(S_i(T) \times Q_i^m(T))$ et

$$(S_{i-1}(T) \times Q_{i-1}^m(T))$$

calculés respectivement sur l'image courante et sur la ou une image précédente de même type P.

6. Procédé de codage selon l'une des revendications 4 et 5, caractérisé en ce que, pour les premières images d'une séquence, des valeurs initiales sont imposées à ladite complexité.

7. Procédé de codage selon l'une des revendications 4 à 6, caractérisé en ce que la valeur de profil de groupe est désignée par PROF(T) et calculée, au début de chaque groupe déterminé, par type d'image T et pour toute la durée de ce groupe.

8. Procédé de codage selon la revendication 7, caractérisé en ce que chaque valeur PROF(T), pour T = I, P, ou B, est proportionnelle à l'expression X(T) x N x R(t), calculée pour chaque type d'image T au début de chaque groupe déterminé.

EP 0 670 663 A1

**9.** Procédé de codage selon l'une des revendications 7 et 8, caractérisé en ce que la valeur initiale du nombre de bits NBSG par groupe glissant est donnée par l'expression :

$$NBRG = (NR_2/P) + WBF - F_e(GOPST) + (R_1 - R_2)D_b$$

dans laquelle :
- N et P ont été déjà définis ;
- $R_1$ et $R_2$ représentent les deux valeurs de débit avant et après changement lorsqu' il est modifié au début d'un groupe déterminé, avec $R_1 = R_2 = R(t)$ lorsqu'au contraire il n'y a pas de changement de débit ;
- $D_b$ désigne un retard constant entre l'instant d'entrée des signaux codés dans ladite mémoire-tampon de stockage de ces signaux codés et l'instant où les données décodées sortiront d'une mémoire-tampon similaire prévue au décodage ;
- $F_e$ (GOPST) est le nombre de bits désignant l'état réel de remplissage de ladite mémoire-tampon de stockage des signaux codés au début de chaque groupe déterminé ;
- WBF est un nombre de bits représentant, à débit constant ou, lorsqu'il y a changement de débit, après ce changement, l'état de remplissage souhaité pour ladite mémoire-tampon de stockage des signaux codés au début de chaque groupe déterminé.

**10.** Dispositif de codage de signaux numériques représentatifs d'une séquence d'images organisées en groupes successifs de N images chacun et subdivisées en tranches regroupant chacune un certain nombre de macroblocs d'image, comprenant au moins des moyens de quantification et de codage desdits signaux associés à des moyens de régulation du débit des signaux codés par calcul d'une grandeur dite complexité de l'image et modification du pas de quantification des signaux à coder en fonction de la complexité ainsi calculée, caractérisé en ce que lesdits moyens de régulation de débit comprennent eux-mêmes :

(A) des moyens d'évaluation de la complexité en fonction du nombre de bits observé à l'issue du codage et du pas de quantification moyen sur une image ;

(B) des moyens d'estimation d'un nombre de bits NBNP dit allocation de bits et évalué pour chaque nouvelle image courante à coder de la séquence, en fonction :

(1) d'une part d'un nombre de bits dit profil de groupe, dont la valeur PROF, calculée successivement pour chaque groupe déterminé de N images, est proportionnelle à la complexité, au nombre N et au débit R(t) observé en sortie du codage et inversement proportionnelle à la période des images ;

(2) d'autre part des grandeurs suivantes, évaluées pour chaque image de la séquence :

(a) la complexité ;

(b) un nombre de bits par groupe glissant de valeur NBSG proportionnelle audit profil de groupe et à la différence entre la valeur de NBSG pour l'image précédente et le nombre total de bits par image, chaque groupe dit glissant étant défini comme composé de ladite nouvelle image et de (N-1) images adjacentes à celles-ci formant avec elle un groupe se décalant d'une image à chaque nouvelle image ;

(C) des moyens de correction d'allocation de bits, prévus pour déterminer, pour chaque nouvelle image à coder, un nombre de bits corrigé dit allocation de bits corrigée CNNP, se substituant à ladite valeur d'allocation de bits NBNP et dont la valeur est choisie parmi trois valeurs comprenant ladite valeur d'allocation non corrigée NBNP estimée précédemment ainsi que deux valeurs-limites MIN(CN) et MAX(CN) d'état de remplissage d'une mémoire-tampon de stockage des signaux codés, le critère de choix étant la sélection de celle des valeurs qui est comprise entre les deux autres ;

(D) des moyens de modification du pas de quantification de chaque macrobloc de ladite nouvelle image, à l'aide d'un coefficient de modification égal ou proportionnel à la somme d'un nombre de bits dit état initial de remplissage d'une mémoire-tampon dite virtuelle et d'un nombre complémentaire égal au nombre de bits déjà engendré par le codage des (j-1) macroblocs précédant le macrobloc concerné, de rang j, dans la même image, diminuée d'un nombre de bits correcteur lié aux valeurs de j et de l'allocation de bits corrigée CNNP et au nombre de macroblocs par image.

**11.** Dispositif de codage selon la revendication 10, caractérisé en ce que lesdits moyens de régulation de débit comprennent :

(A) un étage de détermination de la complexité pour chaque nouvelle image courante à coder en fonction du nombre de bits correspondant aux signaux codés et du pas de quantification moyen sur

22

une image ;

(B) un sous-ensemble de modification de pas de quantification comprenant en série :

(a) un étage de détermination de l'allocation de bits NBSG par groupe d'images glissant, en appelant groupe glissant celui qui inclut ladite image courante à coder et les (N-1) images suivantes ;

(b) un étage de correction d'allocation de bits pour chaque nouvelle image courante à coder, en fonction de ladite allocation NBSG par groupe d'images glissant et desdites valeurs-limites d'état de remplissage de la mémoire-tampon de stockage des signaux codés ;

(c) un étage de modification du pas de quantification en fonction de ladite allocation de bits corrigée CNNP.

**12.** Dispositif de codage selon la revendication 11, dans lequel les images successives sont dites de type I, P ou B respectivement, selon qu'il leur est appliqué un mode de codage dit intra indépendant de toute autre image, ou un mode de codage dit prédictif utilisant une prédiction de mouvement unidirectionnelle à partir d'une autre image intra ou prédite, ou un mode de codage à interpolation bidirectionnelle à partir d'une image antérieure et d'une image postérieure, caractérisé en ce que l'étage de détermination de complexité pour chaque nouvelle image à coder comprend :

(a) une première mémoire de stockage de valeurs d'initialisation de la complexité pour la première image à coder, et un premier circuit de multiplication du nombre de bits consécutif au codage de l'image courante par la sortie d'un circuit de calcul de pas de quantification moyen par image ;

(b) un circuit de sélection, selon le type I, P ou B de l'image courante et selon que cette image courante de type déterminé est l'image initiale ou non de la séquence, d'une seule des quatre sorties de ladite première mémoire et dudit premier circuit de multiplication, la sortie dudit circuit de sélection constituant ladite complexité de l'image courante concernée.

**13.** Dispositif de codage selon la revendication 12, caractérisé en ce que l'étage de détermination de complexité pour chaque nouvelle image à coder comprend également :

(c) un deuxième circuit de multiplication, recevant par l'intermédiaire d'une deuxième mémoire de stockage le nombre de bits de codage et le pas de quantification moyen qui correspondent à l'image de même type précédant l'image courante, le circuit de sélection recevant alors également la sortie dudit deuxième circuit de multiplication pour sélectionner, selon le type de l'image courante et selon que cette image courante de type déterminé est l'image initiale ou non de la séquence, une seule des cinq sorties de ladite première mémoire et desdits premier et deuxième circuits de multiplication.

**14.** Dispositif de codage selon l'une des revendications 12 et 13, caractérisé en ce que l'étage de détermination de l'allocation de bits NBSG par groupe d'images glissant comprend d'une part un circuit de calcul de profil, ou allocation fixe, pour un groupe déterminé de N images successives de la séquence, ce calcul étant effectué en fonction du type I, P, B et de la complexité de la première image de ce groupe déterminé, et d'autre part un circuit d'estimation d'un nombre de bits, ou allocation, par groupe d'images glissant, ladite estimation étant donnée par l'expression suivante :

$$NBSG = NBSG - NBPP + PROF(T)$$

dans laquelle :

- PROF(T) est ledit profil calculé ;
- NBPP est le nombre total de bits par image ;
- NBSG est, pour la première image dudit groupe d'image glissant, égal à une valeur d'initialisation $NBSG_O = NBRG$ et, pour les images ultérieures, la valeur NBSG obtenue par la mise à jour effectuée selon ladite expression ;
- NBRG représente l'allocation globale pour ledit groupe déterminé et est défini par l'expression suivante :

$$NBRG = NR_2/P + WBF - F_e(GOPST) + (R_1 - R_2) D_b$$

dans laquelle :

- $F_e(GOPST)$ désigne l'état de remplissage réel de la mémoire-tampon de stockage des signaux codés ;

23

- P désigne la période des images ;
- $R_1$ et $R_2$ désignent le débit en sortie de ladite mémoire- tampon respectivement avant et après ordre de commutation de débit, avec $R_1 = R_2 = R(t)$ en cas d'absence de commutation de débit ;
- $D_b$ est la somme de retards $D_{eb}$ et $D_{db}$ dûs respectivement à ladite mémoire-tampon du dispositif de codage et à la mémoire-tampon de décodage qui doit lui être associée de façon correspondante dans un dispositif de décodage ;
- WBF est l'état de remplissage souhaité pour ladite mémoire-tampon au début de chaque groupe déterminé et est défini par l'expression WBF = $F_{min}(t) + 4R_2/(P \times NBSP)$, où NBSP est une constante désignant le nombre de tranches d'image par image et $F_{min}(t)$ est la limite inférieure absolue de l'état de remplissage de ladite mémoire-tampon.

**15.** Dispositif de codage selon la revendication 14, caractérisé en ce que l'instant de validation d'un quelconque ordre de commutation de débit par ledit dispositif coïncide avec le début d'un desdits groupes d'images déterminés de la séquence.

**16.** Dispositif de codage selon la revendication 15, caractérisé en ce que ladite limite inférieure absolue $F_{min}(t)$ prend une valeur constante proportionnelle à chaque débit souhaité après commutation.

**17.** Dispositif de codage selon la revendication 15, caractérisé en ce que, R(t) désignant le débit instantané à l'entrée de la mémoire-tampon de stockage des signaux codés, $t_{end}$ l'instant auquel s'achève le codage de l'image courante, et DBPS la taille réelle de ladite mémoire de décodage, ladite limite inférieure absolue est définie par l'expression :

$$F_{min}(t) = MAX(0, (\int_{t_{end}}^{t_{end}+D_b} R(x).dx - DBPS))$$

**18.** Dispositif de codage selon la revendication 15, caractérisé en ce que, to étant l'instant de réception d'un ordre de commutation de débit de la valeur $R_1$ à la valeur $R_2$ et DBPS la taille réelle de ladite mémoire de décodage, ladite limite inférieure absolue est définie :

(a) pour tout $t < t_O$, par l'expression suivante :

$$F_{min}(t) = MAX(O, (D_b R_1 - DBPS))$$

(b) pour tout $t \geqq t_O + D_b$, par l'expression suivante :

$$F_{min}(t) = MAX(O, (D_b R_2 - DBPS))$$

(c) pour tout t compris dans l'intervalle $[t_O, t_O + D_b]$, par l'expression suivante :

$$F_{min}(t) = MAX(O, (D_b R_1 + (t - t_O)(R_2 - R_1) - DBPS)).$$

**19.** Dispositif de codage selon l'une des revendications 16 à 18, caractérisé en ce qu'il comprend des moyens de réglage du retard $D_b$.

**20.** Dispositif de codage selon l'une des revendications 16 à 19, caractérisé en ce que ledit circuit d'estimation comprend, en série, un circuit de calcul du nombre de bits alloué par groupe déterminé et un circuit de calcul du nombre de bits par groupe d'images glissant.

**21.** Dispositif de codage selon la revendication 20, caractérisé en ce que l'étage de correction d'allocation de bits pour chaque nouvelle image à coder comprend un circuit d'évaluation du nombre de bits, ou allocation, envisagé pour la prochaine image dudit groupe déterminé, suivi d'un circuit de correction de ladite allocation, et en ce que l'étage de modification du pas de quantification comprend, en série, un circuit d'initialisation d'état de remplissage d'une mémoire-tampon virtuelle, un circuit de calcul de l'état de remplissage courant de ladite mémoire virtuelle, et un circuit de détermination du pas de quantification de chaque macrobloc de l'image courante.

22. Dispositif de codage selon la revendication 21, caractérisé en ce qu'il comprend également un étage de traitements complémentaires, comprenant lui-même un premier circuit de traitement en cas de pénurie de données codées, dont la sortie est reliée au circuit d'initialisation de l'état de remplissage de la mémoire virtuelle, et un deuxième circuit de traitement en cas de débordement des données codées, dont la sortie est reliée d'une part à l'entrée des moyens de quantification et de codage et d'autre part audit circuit d'initialisation de l'état de remplissage de la mémoire virtuelle.

FIG.1

FIG.2

FIG.3

FIG.4

FIG.5

FIG.6

## FIG.7

## FIG.8

## FIG.9

29

MAX (CN)

MIN(CN)  K  N

400

500 ←

402

NBNP(T)

300

401

200

**FIG.10**

500

REAC

600

600

400

503

502

501

2

200

**FIG.11**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | IEEE TRANSACTIONS ON CONSUMER ELECTRONICS, vol. 39,no. 3, Août 1993 NEW-YORK, pages 545-554, XP 000396331 L.W. LEE ET AL. 'On the error distribution and scene change for the bit rate control of mpeg' * le document en entier * | 1-22 | H04N7/50 H04N7/30 |
| A | EP-A-0 540 961 (INTERNATIONAL BUSINESS MACHINES CORPORATION) * page 8, ligne 40 - page 11, ligne 13 * * page 16, ligne 21 - page 17, ligne 58 * | 1-22 | |
| A | EP-A-0 493 136 (VICTOR COMPANY OF JAPAN LTD.) * le document en entier * | 1-4,7, 10-12 | |
| A | US-A-5 134 476 (ARAVIND RANGARAJAN ET AL) 28 Juillet 1992 * le document en entier * | 1-4,7, 10-12 | |
| A | EP-A-0 535 960 (KABUSHIKI KAISHA TOSHIBA) * le document en entier * | 1-4,7, 10-12 | **DOMAINES TECHNIQUES RECHERCHES (Int.Cl.6)** H04N |
| A | PROCEEDINGS OF THE INTERNATIONAL CONFERENCE ON COMMUNICATIONS, Juin 1991 DENVER, pages 836-841, XP 000269607 S.F. CHANG AND D.G. MESSERSCHMITT 'Adaptable-bit-rate video services on DQDB access networks' * page 839, alinéa 4 - page 840, alinéa 4.2 * | 1-4, 10-12 | |

-/--

Le présent rapport a été établi pour toutes les revendications

| Lieu de la recherche | Date d'achèvement de la recherche | Examinateur |
|---|---|---|
| LA HAYE | 2 Mai 1995 | Poirier, J-M |

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | FERNSEH UND KINOTECHNIK, vol. 46,no. 5, 1 Mai 1992 HEIDELBERG, pages 320-324, XP 000306903 GILGE M 'VISUELLE KOMMUNIKATION UEBER PAKETVERMITTELTE NETZE UND NETZWERKADAPTIVE BILDCODIERUNG' * alinéa 4 * | 1-4, 10-12 | |
| A | EP-A-0 514 663 (IBM) 25 Novembre 1992 * le document en entier * | 1-4, 10-12 | |
| A | IEEE TRANSACTIONS ON CIRCUITS AND SYSTEMS FOR VIDEO TECHNOLOGY, vol. 2,no. 4, Décembre 1992 pages 361-372, XP 000323661 A.R. REIBMAN ET AL. 'Constraints on variable bit-rate video for ATM networks' * alinéa V * | 1-4, 10-12 | |
| P,A | EP-A-0 595 268 (VICTOR COMPANY OF JAPAN) 4 Mai 1994 * le document en entier * | 1-4, 10-12 | **DOMAINES TECHNIQUES RECHERCHES (Int.Cl.6)** |
| A | PATENT ABSTRACTS OF JAPAN vol. 018 no. 152 (E-1523) ,14 Mars 1994 & JP-A-05 328137 (PFU LTD) 10 Décembre 1993, * abrégé * | 1,10 | |
| A | PATENT ABSTRACTS OF JAPAN vol. 017 no. 545 (E-1442) ,30 Septembre 1993 & JP-A-05 153569 (OLYMPUS OPTICAL CO LTD) 18 Juin 1993, * abrégé * | 1,10 | |

-/--

Le présent rapport a été établi pour toutes les revendications

| Lieu de la recherche | Date d'achèvement de la recherche | Examinateur |
|---|---|---|
| LA HAYE | 2 Mai 1995 | Poirier, J-M |

EPO FORM 1503 03.82 (P04C02)

Office européen
des brevets
**RAPPORT DE RECHERCHE EUROPEENNE**
Numero de la demande
EP 95 20 0384

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | PROCEEDINGS OF THE SPIE : IMAGE PROCESSING ALGORITHMS AND TECHNIQUES, vol. 1244, Février 1990 SANTA CLARA, pages 325-330, XP 000471609 A. AYERBE ET AL. 'A quasi-VBR model for packet video' ----- | | |
| | | | **DOMAINES TECHNIQUES RECHERCHES (Int.Cl.6)** |

Le présent rapport a été établi pour toutes les revendications

| Lieu de la recherche | Date d'achèvement de la recherche | Examinateur |
|---|---|---|
| LA HAYE | 2 Mai 1995 | Poirier, J-M |

EPO FORM 1503 03.82 (P04C02)